# EUROPEAN PATENT APPLICATION

(11) **EP 2 249 468 A1**
(43) Date of publication of application: **10.11.2010**
(21) Application number: 09714444.8
(22) Date of filing: 25.02.2009
(51) Int. Cl.: H02M 3/00, H02J 1/00, H02J 1/10

(54) **POWER SUPPLY DEVICE**

(30) Priority: 26.02.2008 JP 2008045303
(71) Applicant: Panasonic Electric Works Co., Ltd, Kadoma-shi Osaka 571-8686 (JP)
(72) Inventor: OKAMOTO, Shinichiro, Kadoma-shi Osaka 571-8686 (JP); KAGAWA, Takuya, Kadoma-shi Osaka 571-8686 (JP); KOSHIN, Hiroaki, Kadoma-shi Osaka 571-8686 (JP)
(74) Representative: Appelt, Christian W.
(86) International application number: PCT/JP2009/053453
(87) International publication number: WO 2009/107680

(57) **Abstract**

A power supply apparatus (10) includes one first power device (30) and a plurality of second power devices (41, 42, and 43). The power supply apparatus is configured to operate simultaneously the first power device (30) and the plurality of the second power devices (41, 42, and 43) to supply a DC power therefrom to a load device (92). The first power device (30) has its output voltage of a DC voltage kept constant irrespective of a magnitude of an output current of the first power device (30). The second power devices (41, 42 and 43) have its output voltage of a DC voltage which decreases monotonically as an output current of the second power devices (41, 42, and 43) increases, respectively. The second power devices (41, 42, and 43) include an adjustment unit configure to adjust the output current in accordance with an instruction value for prescribing a magnitude of the output current. The adjustment unit is configured to, upon receiving the instruction value, modify the output current-output voltage characteristics of the second power device under a condition where the output voltage of the second power device decreases monotonically as the output current of the second power device increases, thereby adjusting the output current of the second power device to a current corresponding to the received instruction value as well as adjusting the output voltage of the second power device corresponding to the adjusted output current of the second power device to the output voltage of the second power device corresponding to the unadjusted output current of the second power device.

## Description

### Technical Field

The present invention is directed to power supply apparatuses configured to supply a DC power to a load device, more specifically to a power supply apparatus which includes a plurality of power devices configured to provide an output voltage of DC voltage and is configured to operate simultaneously the plurality of the power devices to supply a DC power therefrom to a load device to which the power devices are connected.

### Background Art

In the past, there have been proposed power supply apparatuses which simultaneously operate a plurality of power devices to supply a DC power therefrom to a load device to which the power devices are connected.

For example, there is the power supply apparatus including all the power devices which make a constant voltage control. In this power supply apparatus, all the power devices are configured to output the same output voltage.

However, in a practical sense, it is difficult to adjust accurately the output voltages of all the power devices to be the same. Therefore, the power supply apparatus is likely to have a difference between the output voltages of the power devices. Consequently, in the aforementioned power supply apparatus, only the power device having the highest output voltage supplies a DC power to the load device in accordance with its available power capacity. In this situation, when the power device having the highest output voltage fails to supply enough power to the load device, the remaining power devices supplement a shortage of power supply. Thus, in this power supply apparatus, the power device having the highest output voltage, that is, the particular power device is intensively used. Therefore, an advantage obtained from operating simultaneously the plurality of the power devices is reduced.

In order to solve the above problem, there has been proposed a power supply apparatus including two power devices which decrease monotonically its output voltage with an increase of its output current (see Japanese patent laid-open publication No. 10-24823). In this power supply apparatus, the two power devices shows individual output current-output voltage characteristics of which lines have different gradient from each other. This means that, when the two power devices varies their output current by the same extent, one of the power devices shows a variation of the output voltage different from that of the other power device.

In this power supply apparatus, each of the power devices operates to reach a balance point determined by its output current-output voltage characteristics and the load current in accordance with a magnitude of a consumed current (load current) of the load device. Therefore, each of the power devices can output the desired output voltage and output current.

However, in this power supply apparatus, the output voltages (that is, supply voltages for the load current) of each of the power device are varied due to a magnitude of the load current. Therefore, the power supply apparatus fails to output the stable supply voltage. In this power supply apparatus, in order to keep the supply voltage to the load device at a constant level irrespective of changes of the output currents of the each of the power devices, both of the power supply apparatus have to vary their output current-output voltage characteristics, For satisfying this requirement, the power supply apparatus needs to have a more complex configuration.

Now, in order to solve the above problem, one of the power devices which are operated simultaneously can make a constant voltage control, and the remaining power devices can make a constant current control. In the power supply apparatus including the power device of the constant voltage control and the power device of the constant current control, the power device of the constant current control has the predetermined output current. The power device of the constant current control supplies the predetermined output current to the load current while having its output voltage identical to an output voltage (reference voltage) of the power device of the constant voltage control. In this situation, the power device of the constant voltage current supplements a shortage of the load current. Therefore, the supplied voltage for the load device is kept constant voltage (the output voltage of the power device of the constant voltage control) even when the load current is varied. Consequently, this power supply apparatus can successfully supply power to the load current.

However, in this power supply apparatus, when the power device of the constant voltage control loses its available power capacity (e.g. in a case of the power device being connected to a commercial power source, a power failure or instantaneous power failure of the commercial power source occurs), the reference voltage for determining the magnitude of the output voltage of the power device of the constant current control disappears. Therefore, the power device of the constant current control gives its output voltage which is likely to increase extremely to an excess voltage, or decrease extremely to a short voltage.

### Disclosure of Invention

In view of the above insufficiency, the present invention has been aimed to propose a power supply apparatus which is capable of successfully supplying power to a load device by means of its function of adjusting the output currents of each of power devices while keeping a supply voltage to the load device constant irrespective of a variation of a load current and available power capacity of the power device, when operating simultaneously a plurality of the power devices.

A power supply apparatus in accordance with the present invention includes a plurality of power devices, each of said power devices being configured to provide an output voltage of a DC voltage. The power supply apparatus is configured to operate simultaneously the plurality of the power devices to supply a DC power therefrom to a load device to which the power devices are connected. The plurality of the power devices includes a first power device and a second power device. The first power device is configured to have output current-output voltage characteristics of keeping an output voltage of the first power device constant irrespective of a magnitude of an output current of the first power device. The second power device is configured to have output current-output voltage characteristics of decreasing monotonically an output voltage of the second power device with an increase of an output current of the second power device. The second power device includes an adjustment unit configure to adjust the output current of the second power device in accordance with an instruction value. The adjustment unit is configured to, upon receiving the instruction value, modify the output current-output voltage characteristics under a condition where the output voltage decreases monotonically as the output current increases, thereby adjusting the output current to a current corresponding to the received instruction value as well as adjusting the output voltage corresponding to the adjusted output current to the output voltage corresponding to the unadjusted output current.

According to the present invention, even if the load current (consumed current) of the load device side is varied, or even if a supply capacity of the second power device is varied, it is possible to adjust a magnitude of the output current of the second power device while the output voltage of the second power device is kept constant because the adjustment unit modifies the output current-output voltage characteristics of the second power device. Therefore, it is possible to successfully supply power to the load device.

In a preferred embodiment, the second power device includes a control unit configured to output the instruction value. The instruction value is defined to prescribe a magnitude of the output current of the second power device.

According to this embodiment, it is possible to easily modify the output current-output voltage characteristics of the second power device by means of outputting the instruction value from the control unit to the second power device.

In a preferred embodiment, the adjustment unit is configured to modify the output current-output voltage characteristics of the second power device by adjusting the output voltage of the second power device to a voltage obtained by addition of a predetermined voltage to or subtraction of the same from the unadjusted output voltage of the second power device such that the output current of the second power device given in accordance with the modified output current-output voltage characteristics becomes corresponding to the instruction value when the output voltage of the second power device is identical to the output voltage of the first power device.

According to the embodiment, it is possible to easily adjust a magnitude of the output current of the second power device in conformity with the instruction value, irrespective of a change of the load current.

In a more preferred embodiment, the first power device includes an AC/DC converter configured to convert a source voltage received from a commercial power source into the DC voltage.

According to this embodiment, the first power device receives the source voltage from the commercial power source supplying stable power. Therefore, it is possible to reduce an influence of a load variation caused by an on-off operation of the load device. Thus, it is possible to more successfully supply power to the load device.

In a more preferred embodiment, the second power device includes a current detector, a voltage detector, a DC/DC converter, and a switching controller. The current detector is configured to detect the output current of the second power device. The voltage detector is configured to detect the output voltage of the second power device. The DC/DC converter includes a switching device and configured to make a power conversion by an on-off operation of the switching device. The switching controller is configured to send to the switching device a pulse width modulated signal for controlling the on-off operation of the switching device such that the second power device has a particular output current-output voltage characteristics of decreasing monotonically the output voltage of the second power device with an increase of the output current of the second power device, on the basis of a detection result of the output current detector and a detection result of the output voltage detector.

According to the embodiment, the second power device can be manufactured by sharing most parts of the first power device only with exception of few additional parts. Therefore, the second power device can be implemented only by slight modification to the configuration of the first power device.

In a more preferred embodiment, the adjustment unit is configured to calculate a difference value between a value corresponding to the received instruction value and the detection result of the current detector, and output the calculated difference value to the switching controller. The switching controller is configured to modify a duty ratio of the pulse width modulation signal depending on the received difference value and the detection result of the voltage detector.

According to the embodiment, it is possible to easily adjust a magnitude of the output current of the second power device.

In a more preferred embodiment, the adjustment unit is configured to calculate an error between the detection result of the current detector and a value corresponding to the instruction value. The adjustment unit is configured to correct the output current-output voltage characteristics to reduce the calculated error under the condition where the output voltage decreases monotonically as the output current increases.

According to the embodiment, the actual output current is fed back to correct the error between the actual output current and the output current corresponding to the instruction value Therefore, it is possible to improve the accuracy of the output current of the second power device.

In a more preferred embodiment, the adjustment unit is configured to modify the output current-output voltage characteristics to reduce an increase rate of the output voltage relative to a decrease of the output current when the output voltage of the second power device becomes equal to a prescribed threshold.

According to the embodiment, it is possible to restrain a surge of the output voltage which would otherwise occur due to decreased load current. Therefore, the voltage applied to the load device can be restrained from excessively increasing.

### Brief Description of Drawings

FIG. 1 is a block diagram illustrating a primary part of a power supply apparatus of a first embodiment,
FIG. 2 is a schematic view illustrating a DC distribution system where the above power supply device is applied,
FIG. 3 is a circuit diagram illustrating a first power device of the above power supply apparatus,
FIG. 4 is a circuit diagram illustrating a second power device of the above power supply apparatus,
FIG. 5A is a diagram illustrating output current-output voltage characteristics of the second power device of the above power supply apparatus,
FIG. 5B is a diagram illustrating output current-output voltage characteristics of the first power device of the above power supply apparatus,
FIG. 5C is an explanatory view illustrating an output current of the second power device of the above power supply apparatus,
FIG. 6 is an explanatory view illustrating an operation of the second power device of the above power supply apparatus,
FIG. 7 is an explanatory view illustrating a variation of the output current-output voltage characteristics of the second power device of the above power supply apparatus,
FIG. 8 is a block diagram illustrating a primary part of a power supply apparatus of a second embodiment,
FIG. 9 is a diagram illustrating output current-output voltage characteristics of the power supply apparatus of a third embodiment,
FIG. 10 is a block diagram illustrating a primary part of the above power supply apparatus,
FIG. 11 is a diagram illustrating output current-output voltage characteristics of the power supply apparatus of a fourth embodiment,
FIG. 12 is a block diagram illustrating a primary part of a power supply apparatus of a fifth embodiment,
FIG. 13 is a diagram illustrating output current-output voltage characteristics of an AC/DC converter, a PV converter, and a BAT converter of the above power supply apparatus,
FIG. 14 is a circuit diagram illustrating a second power device of a power supply apparatus of a sixth embodiment,
FIG. 15 is a block diagram illustrating a primary part of the above power supply apparatus,
FIG. 18 is an explanatory view illustrating a function of a second power device of the above power supply apparatus,

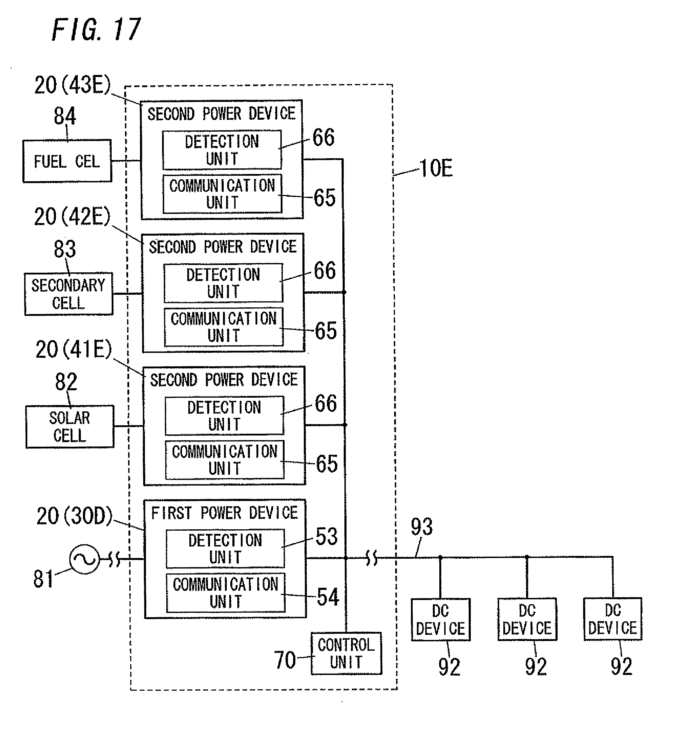

FIG. 17 is a block diagram illustrating a primary part of a power supply apparatus of a seventh embodiment,

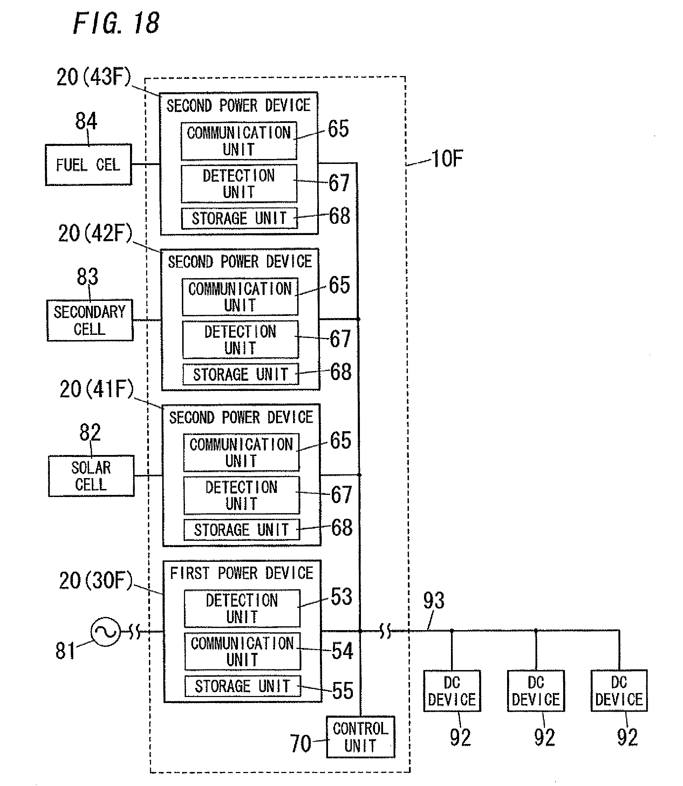

FIG. 18 is a block diagram illustrating a primary part of a power supply apparatus of an eighth embodiment, and

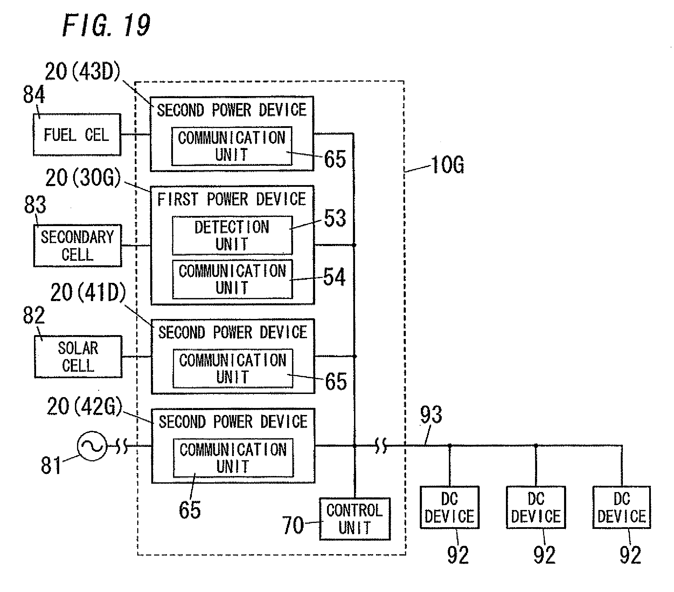

FIG. 19 is a block diagram illustrating a primary part of a power supply apparatus of a ninth embodiment.

### Best Mode for Carrying Out the Invention

### (first embodiment)

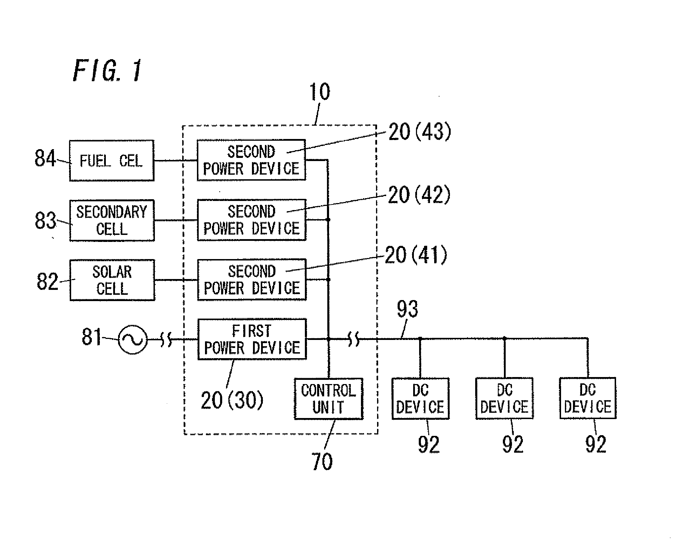

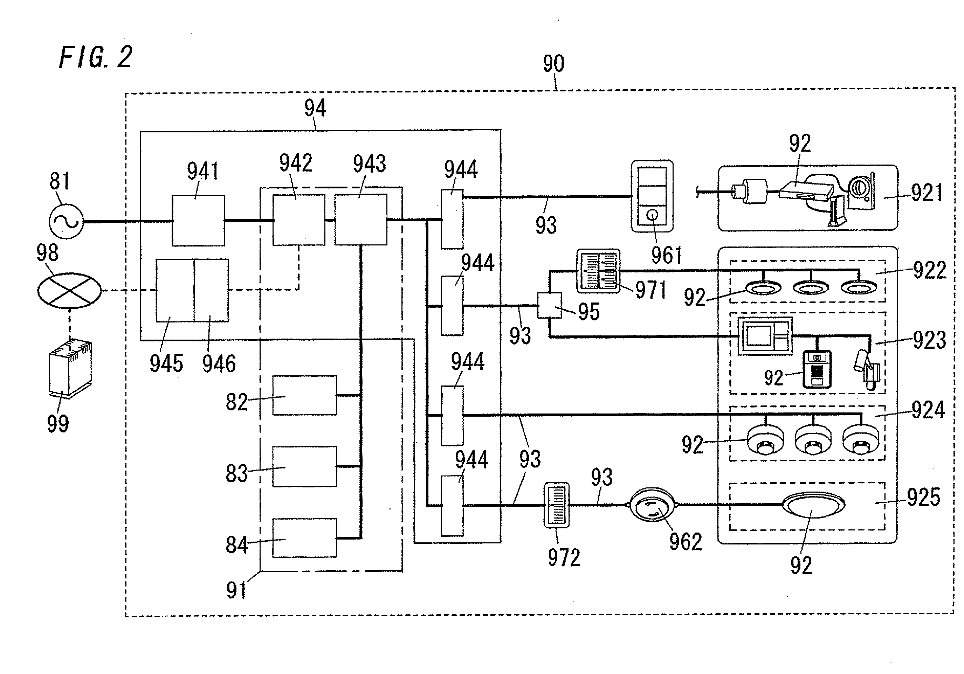

In the embodiment explained below, a house **90** (see FIG. 2) of a single-family dwelling is exemplified as a building where a DC distribution system, where a power supply apparatus **10** (see FIG. 1) of the present invention is applied, is installed. It is noted that the power supply apparatus **10** in accordance with the present invention can be applied to either a house of a single-family dwelling or a housing complex.

As shown in FIG. 2, there are a DC power supply unit **91** configured to output DC power and the DC device **92** placed in the house **90.** The DC device **92** is a load (load device) activated by DC power. DC power is supplied to the DC device **92** via a DC supply line **93** connected to an output terminal of the DC power supply unit **91.** There is a DC breaker **944** interposed between the DC power supply unit **91** and the DC device **92.** The DC breaker **944** is configured to monitor current flowing through the DC supply line **93** and to limit or terminate electrical power supply from the DC power supply unit **91** to the DC device **92** via the DC supply line **93** upon detecting an abnormal state.

The DC supply line **93** is adopted as a power line for DC power as well as a communication line. For example, it is possible to communicate between devices connected to the DC supply line **93** by means of superimposing on a DC voltage a communication signal used for transmitting a data and made of a high-frequency carrier. This technique is similar to a power line communication technique where a communication signal is superimposed on an AC voltage applied to a power line for supplying an AC power.

The aforementioned DC supply line **93** is connected to a home server **945** via the DC power supply unit **91**. The home server **945** is a primary device for constructing a home communication network (hereinafter called "home network."). The home server **945** is configured to communicate with a subsystem constructed by the DC device **92** in the home network, for example.

In the instance shown in FIG. 2, an information system **921,** lighting systems **922** and **925,** an entrance system **923,** and a home alarm system **924** are adopted as the subsystem. The each subsystem is an autonomous distributed system, and operates by itself. The subsystem is not limited to the aforementioned instance.

The DC breaker **944** is associated with the subsystem. In the instance shown in FIG. 2, each of the information system **921,** a pair of the lighting system **922** and entrance system **923,** the home alarm system **924,** and the lighting system **925** is associated with one DC breaker **944.** A connection box **95** is provided to associate one DC breaker **944** with a plurality of the subsystems. The connection box **95** is configured to divide a system of the DC supply line for each subsystem. In the instance shown in FIG. 2, the connection box **95** is interposed between the lighting system **922** and the entrance system **923.**

The information system **921** includes the informational DC device **92** such as a personal computer, a wireless access point, a router, and an IP telephone transceiver. This DC device **92** is connected to a DC socket **961** preliminarily provided to the house **90** (provided at the time of constructing the house **90)** as a wall outlet or a floor outlet, for example.

Each of the lighting systems **922** and **925** includes the lighting DC device **92** such as a lighting fixture. In the instance shown in Fig. 2, the lighting system **922** includes the lighting fixture (DC device **92)** preliminarily provided to the house **90.** It is possible to send a control instruction to the lighting fixture of the lighting system **922** by use of an infrared remote controller. Further, the control instruction can be sent by transmitting a communication signal from a switch **971** connected to the DC supply line **93.** In short, the switch **971** has a function of communicating with the DC device **92.** In addition, the control instruction can be sent by transmitting a communication signal from the home server **945** or other DC device **92** of the home network. The control instruction for the lighting fixture indicates such as turning on, turning off, dimming, and blinking. Meanwhile, the lighting system **925** includes the lighting fixture (DC device **92)** connected to a ceiling-mounted hooking receptacle **962** preliminarily provided on a coiling. It is noted that the lighting fixture is attached to the ceiling-mounted hooking receptacle **962** by a contractor at the time of constructing an interior of the house **90** or attached to the ceiling outlet **962** by a resident of the house **90.** In addition, a switch **972** is interposed between the ceiling-mounted hooking receptacle **962** and the DC breaker **944.** The switch **972** is used to turning on and off the DC device **92** such as a lighting apparatus connected to the ceiling-mounted hooking receptacle **962.**

The entrance system **923** includes the DC device **92** configured to respond to a visitor and to monitor an intruder.

The home alarm system **924** includes the alarming DC device **92** such as a fire alarm.

Any DC device **92** can be connected to each of the aforementioned DC outlet **961** and ceiling-mounted hooking outlet **962**. Each of the DC outlet **961** and ceiling-mounted hooking receptacle **962** outputs DC power to the connected DC device **92.** Therefore, the DC outlet **961** and ceiling-mounted hooking receptacle **962** are hereinafter collectively called the "DC outlet", when a distinction between the DC outlet **961** and the ceiling-mounted hooking receptacle **962** is unnecessary. A case of the DC outlet has a connection slot (plug-in connection slot) for inserting a terminal of the DC device **92.** A terminal receiving member configured to directly contact to the terminal which is inserted into the connection slot is housed in the case of the DC outlet. In short, the DC outlet with above mentioned configuration makes contact-type power supply. The DC device with a communication function is capable of transmitting a communication signal via the DC supply line **93.** The communication function is provided to not only the DC device **92** but also DC outlet. It is noted that the terminal is directly attached to the DC device **92** or is attached to the DC device **92** via a connection wire.

The home server **945** is connected to not only the home network but also the wide area network **98** constructing Internet. While the home server **945** is connected to the wide area network **98,** a user can enjoy service provided by a center server (computer server) **99** connected to the wide area network.

The center server **99** provides service capable of monitoring or controlling a device (which is mainly the DC device **92,** but which may be other apparatus having a communication function) connected to the home network via the wide area network **98,** for example. The service enables monitoring or controlling a device connected to the home network by use of a communication terminal (not shown) having a browsing function such as a personal computer, an internet TV, and a mobile telephone equipment.

The home server **945** has a function of communicating with the center server **99** connected to the wide area network **98** and a function of communicating with a device connected to the home network. The home server **945** further has a function of collecting identification information (e.g. IP address) concerning a device connected to the home network. The home server **945** and center server **99** mediate a communication between a home device and a communication terminal in the wide area network **98.** Therefore, it is possible to monitor or control the home device by use of the communication terminal.

When a user attempts to monitor or control the home device by use of the communication terminal, the user controls the communication terminal so as to store a monitoring request or a control request in the center server **99.** The device placed in the house establishes periodically one-way polling communication, thereby receiving the monitoring request or control request from the communication terminal. According to the aforementioned operation, it is possible to monitor or control the device placed in the house by use of the communication terminal. When an event (such as fire detection) of which the home device should notify the communication terminal occurs, the home device notifies the center server **99** of occurrence of the event. When the center server **99** is notified of the occurrence of the event by the home device, the center server **99** notifies the communication terminal of the occurrence of the event by use of an e-mail.

A function of communicating with the home network of the home server **945** includes an important function of detecting and managing a device constructing the home network. By means of utilizing UPnP (Universal Plug and Play), the home server **945** automatically detects a device connected to the home network. The home server **945** further includes a display device **946** having a browsing function, and controls the display device **946** to display a list of the detected device. The display device **946** includes a touch panel or another user interface unit. Therefore, it is possible to select a desired one from options displayed on a screen of the display device **946.** Accordingly, a user (a contractor or a resident) of the home server **945** can monitor and control the device through the screen of the display device **946.** The display device **946** may be separated from the home server **945.**

The home server **945** manages information with relation to connection of a device. For example, the home server **945** stores a type or a function and an address of the device connected to the home network. Therefore, it is possible to make a linked operation between devices of the home network. As described in the above, the information with relation to connection of a device is automatically detected. In order to make the linked operation between the devices, it is sufficient that an association between devices is automatically made by an attribution of a device. An information terminal such as a personal computer may be connected to the home server **945.** In this case, the association between devices can be made by use of a browsing function of the information terminal.

Each of the devices holds a relation with regard to the linked operations between the devices. Therefore, the devices can make the linked operation without requiring to access to the home server **945.** After establishing an association with regard to the linked operation of respective devices, a lighting fixture, which is one of the devices, is caused to turn on and off by manipulation of a switch, which is another of the devices, for example. Although the association with regard to the linked operation is made for the devices belonging to the same subsystem, the association with regard to the linked operation may be made for the devices belonging to the different subsystems.

The DC supply unit **91** is configured to basically generate DC power from AC power supplied from an AC power source, for example a commercial power source **81** located outside. In the instance shown in FIG. 2, the AC power source **81** is connected to an AC/DC converter **942** including a switching regulator via a main breaker **941**. The main breaker **941** is embedded in a distribution board **94.** DC power output from the AC/DC converter **942** is supplied to each DC breaker **944** via a cooperation control unit **943.**

The DC supply unit **91** is provided with a secondary cell **83** in view of a period (blackout period of the commercial power source) in which the DC supply unit **91** fails to receive electrical power from the AC power source **81.** In the DC supply unit **91,** a solar cell **82** and fuel cell **84** configured to generate DC power can be used together with the secondary cell **83.** The solar cell **82,** secondary cell **83,** and fuel cell **84** respectively are a dispersed power source in view of a main power source induing the AC/DC converter **942.** In the instance shown in FIG. 2, the solar cell **82,** secondary cell **83,** and fuel cell **84** respectively include a circuit unit configured to control its output voltage, The solar cell **82** further includes not only a circuit unit of controlling electrical discharge but also a circuit unit of controlling electrical charge.

Although the solar cell **82** and fuel cell **84** of the dispersed power sources are dispensable, the secondary cell **83** is preferred to be provided. The secondary cell **83** is charged by the main power source or the other dispersed power source at the right time. The secondary cell **83** is discharged during a period in which the DC supply unit **91** fails to receive electrical power from the AC power source **81.** In addition, the secondary cell **83** is discharged at the right time as necessary. The cooperation control unit **943** is configured to control discharge and charge of the secondary cell **83** and to make cooperation between the main power source and the dispersed power source. In short, the cooperation control unit **943** functions as a DC power control unit configured to control distributing to the DC device **92** electrical power from the main power source and dispersed power source constituting the DC supply unit **91**. It is noted that DC power from the solar cell **82,** secondary cell **83,** and fuel cell **84** may be input to the AC/DC converter **942** by converting into AC power.

A drive voltage of the DC device **92** is selected from different voltages respectively suitable to individual devices of different voltage requirements. For this purpose, the cooperation control unit **943** is preferred to include a DC/DC converter configured to convert DC voltage from the main power source and dispersed power source into a desired voltage. Normally, a fixed voltage is applied to one subsystem (or the DC device **92** connected to one particular DC breaker **944**). 90owever, different voltages may be selectively applied to one subsystem by use of three or more lines. Use of two wired DC supply line **93** can vary the voltage applied between wires with time. The DC/DC converter can be placed at plural points in a similar fashion as the DC breakers **944.**

In the instance shown in FIG. 2, only one AC/DC converter **942** is provided. However, a plurality of AC/DC converters **942** may be connected in parallel to each other. When the plurality of the AC/DC converters **942** is provided, it is preferred to vary the number of the AC/DC converters **942** being activated in accordance with a magnitude of the load.

The aforementioned AC/DC converter **942,** cooperation control unit **943**, DC breaker **944,** solar cell **82,** secondary cell **83,** and fuel cell **84** respectively are provided with a communication function. Therefore, the linked operation can be performed in response to status of each of the main power source, dispersed power source, and loads including the DC device **92.** Like a communication signal used for the DC device **92,** a communication signal used by the communication function is transmitted by being superimposed on DC voltage.

In the instance shown in FIG. 2, in order to convert AC power output from the main breaker **941** into DC power, the AC/DC converter **942** is placed in the distribution panel **94.** 90owever, the AC/DC converter **942** is not necessarily placed in the distribution panel **94.** For example, branch breakers (not shown) may be connected to an output side of the main breaker **941** in the distribution panel **94** such that a plurality of systems is branched off from an AC supply line, and an AC/DC converter may be provided to an AC supply line of each of the systems, That is, each system may be provided with an apparatus configured to convert AC power into DC power. In this instance, it is possible to provide the DC supply unit **91** to each unit such as a floor or room of the house **90.** Accordingly, it is possible to manage the DC supply unit **91** for each system. In addition, it is possible to shorten a distance between the DC supply unit **91** and the DC device **92** configured to utilize DC power. Therefore, it is possible to reduce power loss caused by a voltage drop which occurs in the DC supply line **93.** Alternatively, the main breaker **941** and branch breaker may be housed in the distribution panel **94,** and the AC/DC converter **942,** cooperative control unit **943,** DC breaker **94,** and home server **945** may be placed in another panel different from the distribution panel **94.**

Next, an explanation is made to a power supply apparatus **10** of the first embodiment of the present invention with reference to FIG. 1. The power supply apparatus **10** includes a plurality (four, in the present embodiment) of power devices **20** configured to apply an output voltage of a DC voltage. The power supply apparatus **10** is configured to simultaneously operate the plurality of the power devices **20** to supply a DC power to the DC device (load device) **92** to which the power devices **20** are connected. In the instance shown in FIG. 2, the power supply apparatus **10** can be adopted as the DC power supply unit **91**.

Herein, one of the power devices **20** is a first power device, and the remaining power devices **20** are second power devices. In a following explanation, in order to distinguish the first power device and the respective second power devices, the first power device is designated by the reference number of **30,** and the second power devices are designated by the reference numbers of **41** to **43,** respectively, as necessary. When the second power devices **41** to **43** need not be distinguished from each other, the second power device is designated by the reference number of **40.**

As described in the above, the power supply apparatus **10** includes the one first power device **30** and the plurality (three, in the present embodiment) of the second power devices **40.** In the following explanation, although **lout** denotes an output current of the power device **20,** the output current of the first power device **30** is designated by **loa**, and the output currents of the second power devices **41, 42,** and **43** are designated by **Iob, Ioc**, and **Iod**, respectively, as necessary. Likewise, although **Vout** denotes an output voltage of the power device **20,** the output voltage of the first power device **30** is designated by **Voa**, and the output voltages of the second power devices **41, 42,** and **43** are designated by **Vob, Voc,** and **Vod,** respectively, as necessary.

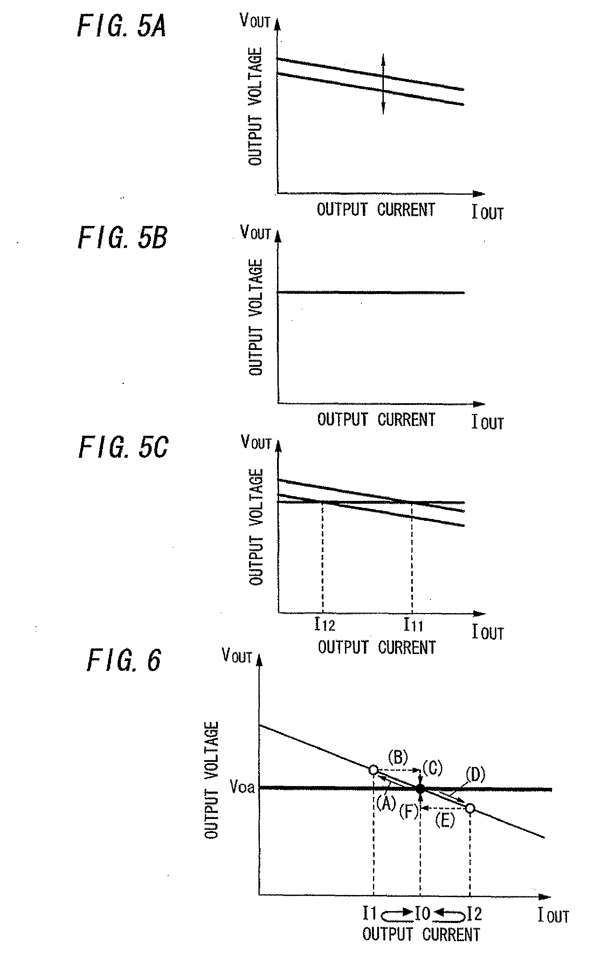

The first power device **30** is configured to provide the output voltage **Vout** of a DC voltage which is a constant voltage irrespective of a magnitude of the output current **lout** (see FIG. 5B). That is, the first power device **30** is configured to have output current-output voltage characteristics of keeping the output voltage **Vout** of the first power device **30** constant irrespective of a magnitude of the output current **lout** of the first power device **30.** For example, the first power device **30** receives an input voltage **Vin** of a DC voltage generated from a source voltage of the commercial power source **81.** It is noted that the first power device **30** may receive the input voltage **Vin** of the source voltage of the commercial power source **81.** With this arrangement , the first power device **30** includes an AC/DC converter configured to convert the source voltage of the commercial power source **81** into a DC voltage.

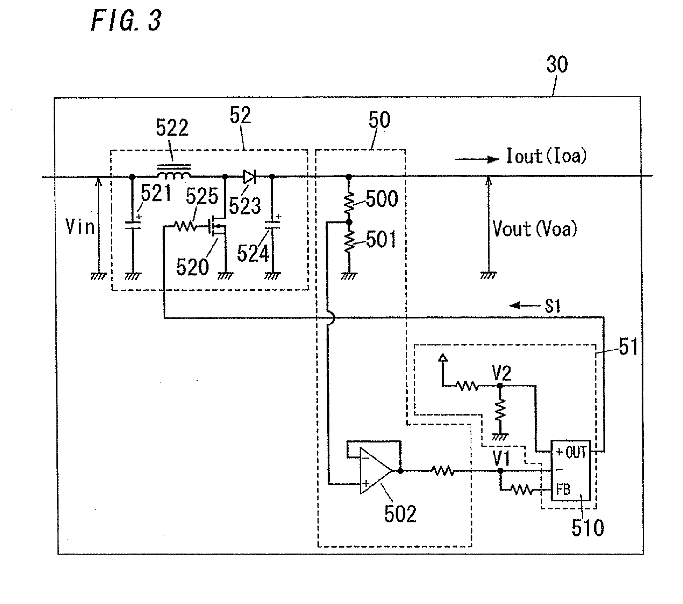

As shown in FIG. 3, the first power device **30** includes a voltage detector **50,** a switching controller **51,** and a DC-DC converter **52.**

The voltage detector **50** is configured to detect the output voltage **Vout** (**Voa**) of the first power device **30.** For example, the voltage detector **50** includes two resistors **500** and **501** connected in series and a voltage follower **502** configured to receive a divided voltage generated by the resistors **500** and **501.**

The switching controller **51** includes a switching IC **510** configured to receive a detection voltage (output voltage of the voltage follower **502) V1** of the voltage detector **50** as well as a reference voltage **V2.**

The switching IC **510** is configured to output to a switching device **520** a pulse width modulation signal **S1** which has its duty ratio selected such that a difference voltage (**V2-V1**) between the detection voltage **V1** and the reference voltage **V2** is kept constant. That is, the switching IC **510** is configured to select the duty ratio of the pulse width modulation signal **S1** such that the output voltage **Vout** (detection voltage **V1)** is kept constant.

As seen from the above, the switching controller **51** is configured to generate the pulse width modulation signal **S1** which has its duty ratio selected based on the reference voltage **V2** and the detection voltage **V1** of the voltage detector **50.**

DC-DC converter **52** includes a smoothing capacitor **521,** an inductor **522,** the switching device **520**, a diode **523,** and a smoothing capacitor **524** which are arranged in this order from its input side (left side, in FIG. 3). The DC-DC converter **52** operates to turn on and off the switching device **520** for increasing the input voltage **Vin**.

For example, the switching device **520** is a field-effect transistor. The switching device **520** has its gate receiving the pulse width modulation signal **S1** from the switching IC **510** via a resistor **525.** Therefore, the switching device **520** is turned on and off in accordance with the duty ratio of the pulse width modulation signal **S1** from the switching controller **51.** While the switching device **520** is turned on, the switching device **520** has its source electrically connected to its drain. Thereby, the inductor **522** continues to accumulate electromagnetic energy. Thereafter, when the switching device **520** is turned off, the inductor **522** discharges the accumulated electromagnetic energy. Thereby, the input voltage **Vin** is raised. The raised input voltage **Vin** is smoothed by the smoothing capacitor **524** and is output to the DC device **92** as the output voltage **Vout.**

The first power device **30** performs the aforementioned operation to make a feedback control to have the output current-output voltage characteristics of keeping the output voltage **Vout** of the first power device **30** constant irrespective of the magnitude of the output current **lout** of the first power device **30,** as shown in FIG. 5B.

The second power device **40** is configured to provide the output voltage **Vout** of a DC voltage which decreases monotonically as the output current **lout** of the second power device **40** increases, as shown in FIG. 5A. That is, the second power device **40** is configured to have output current-output voltage characteristics of decreasing monotonically the output voltage **Vout** of the second power device **40** with an increase of the output current **lout** of the second power device **40** (in other words, output current-output voltage characteristics of increasing monotonically the output voltage **Vout** of the second power device **40** with a decrease of the output current **lout** of the second power device **40).**

A line indicative of the output current-output voltage characteristics of the second power device **40** can be expressed as a relation of Vvut=-a*lout+V0 (a>0, V0>0). Wherein, **V0** is constant, and satisfies a relation V0=Vout+a*lout. Further, a indicates a gradient (a gradient of a line indicative of a relation between the output current **lout** and the output voltage Vout). It is noted that a may be different in each of the second power devices **40** and may be common to the second power devices **40.**

As shown in FIG. 1, the second power devices **41, 42,** and **43** are connected to the solar cell **82,** the secondary cell **83,** and the fuel cell **84,** respectively. The second power devices **40** receive output voltages from the corresponding cells **82, 83,** and **84** as its input voltage **Vin,** respectively,

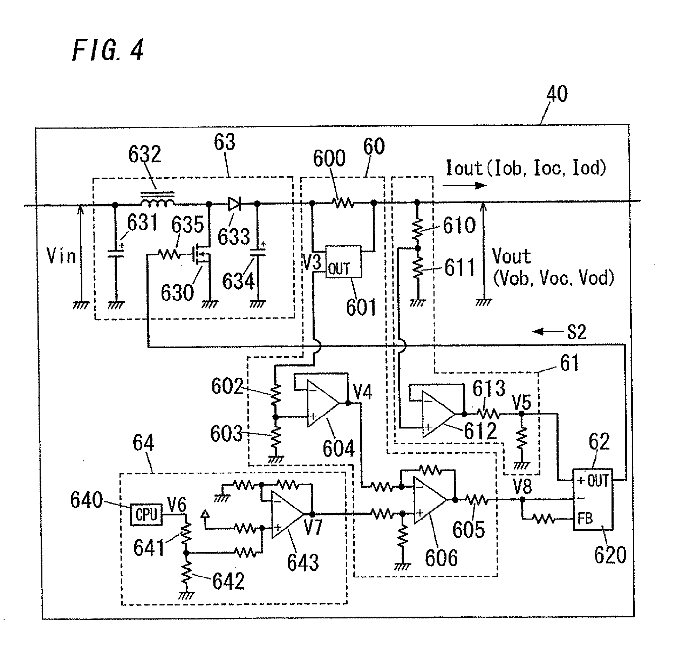

As shown in FIG. 4, the second power device **40** includes a current detector **60,** a voltage detector **61,** a switching controller **62,** and a DC-DC converter **63.** In addition, the second power device **40** includes an adjustment unit **64** configured to adjust the output current **Iout (Iob, Ioc**, **Iod**) in accordance with an instruction value.

The current detector **60** is configured to detect the output current **Iout** (**Iob**, **Ioc**, **Iod**) of the second power device **40.** The current detector **60** of the present embodiment includes resistors **600** and **605,** a current IC **601** configured to detect a voltage across the resistor **600,** resistors **f>02** and **603** for dividing an output voltage **V3** of the current IC **601,** and a voltage follower **604** configured to receive a divided voltage generated by the resistors **602** and **603.**

The voltage detector **61** is configured to detect the output voltage **Vout (Vob, Voc, Vod)** of the second power device **40.** For example, the voltage detector **61** includes two resistors **610** and **611** connected in series and a voltage follower **612** configured to receive a divided voltage generated by the resistors **610** and **611.**

The switching controller **62** is configured to generate a pulse width modulation signal **S2** which has its duty ratio selected on the basis of the detection voltage (output voltage of the voltage follower **612**) **V5** of the voltage detector **61** and a voltage **V8** output from the current detector **60.** The switching controller **62** includes a switching IC **620** into which the detection voltage **V5** of the voltage detector **61** and the voltage **V8** are input.

DC-DC converter **63** includes a smoothing capacitor **631**, an inductor **632,** the switching device **630,** a diode **633,** and a smoothing capacitor **634** which are arranged in this order from its input side (left side, in FIG. 4). The DC-DC converter **52** operates to turn on and off the switching device **520** for increasing the input voltage **Vin**.

The adjustment unit **64** is configured to, upon receiving the instruction value, vary the output current-output voltage characteristics under the condition where the output voltage **Vout** decreases monotonically as the output current **lout** increases, thereby adjusting the output current **lout** to match a current corresponding to the received instruction value as well as adjusting the output voltage **Vout** corresponding to the adjusted output current **lout** to match the output voltage **Vout** corresponding to the unadjusted output current **lout.** The adjustment unit **64** of the present embodiment is configured to displace in parallel the line indicative of the output current-output voltage characteristics, thereby varying the output current-output voltage characteristics. That is, above **V0** is varied while above a is fixed.

Next, an explanation is made to a detailed configuration of the adjustment unit **64**, The adjustment unit **64** of the present embodiment includes a CPU **640** configured to obtain the instruction value prescribing the output current **lout** from an after-mentioned control unit **70** (see FIG, 1). Further, the adjustment unit **64** includes two resistors **641** and **642** for dividing an output voltage **V6** of the CPU **640** and a non-inverting amplifier circuit **643** into which a divided voltage generated by the resistors **641** and **642** are input.

The CPU **640** makes a control for varying the magnitude of the output current **lout** on the basis of the instruction value received from the control unit **70** while the power supply apparatus **10** is in operation (the power supply apparatus **10** supplies a power to the DC device **92).**

Herein, the aforementioned control unit **70** is configured to receive information of power capacity of each of the power devices **20** as well as information of required current or power from each of the DC devices **92** while the power supply apparatus **10** is in operation, In order to improve power efficiency of a whole system, the control unit **70** is configured to, upon receiving the information, decide amounts of power to be supplied from each of the power devices **20** with reference to electric generating capacities of each of power sources connected respectively to the power devices **20,** a remaining battery level, and a period of time. Thereafter, the control unit **70** is configured to adjust outputs of each of the power devices **20** depending on the resultant amounts of power. That is, the control unit **70** is configured to transmit the instruction values prescribing the magnitudes of the output currents **Iob, Ioc**, and **Iod** of the second power devices **40** to the adjustment units **64** of the second power devices **40** with consideration for the efficiency of the whole system, respectively. It is noted that the instruction value may be defined as a current value, and that the instruction values may be voltage values depending on the magnitudes of the output currents **Iob, Ioc**, and **Iod**, respectively, Further, the instruction values are not limited to the output currents **Iob, Ioc**, and **Iod** for each of the second power devices **40,** but may be magnitudes of output power of each of the second power devices **40.**

The CPU **640** is configured to output the output voltage **V6** having its magnitude corresponding to the instruction value received from the control unit **70.** The non-inverting amplifier circuit **643** is configured to increase its output voltage **V7** as the output voltage **V6** of the CPU **640** increases and to decrease its output voltage **V7** as the output voltage **V6** of the CPU **640** decreases. Therefore, the output voltage **V6** has a proportional relation with the output voltage **V7.**

Further, the current detector **60** has a differential amplifier circuit **606** interposed between the voltage follower **604** and the resistor **605.** The differential amplifier circuit **606** is configured to apply a voltage **V8** to the switching IC **620.** Herein, the voltage **V8** is proportionate to a difference voltage (**V7-V4**) between the output voltage **V7** of the non-inverting amplifier circuit **643** and the detection voltage **V4** (the output voltage of the voltage follower **604)** of the current detector **60,** and is defined as V8=β(V7-V4), wherein β>0. Therefore, even if the detection voltage **V4** is not changed, the voltage **V8** is increased when the output voltage **V6** and the output voltage **V7** are increased depending on the instruction value from the control unit **70.** By contrast, the voltage **V8** applied to the switching IC **620** is decreased when the output voltage **V6** and the output voltage **V7** are decreased. It is noted that β is selected such that the switching IC **620** can make a calculation of the voltage **V8** and the detection voltage **V5.**

The switching IC **620** is configured to output the pulse width modulation signal **S2** to the switching device **630.** The duty ratio of the pulse width modulation signal **S2** is selected (varied) such that a difference voltage **Vs** (=V8-V5=βV7-(V5+βV4)) between the voltage **V8** and the detection voltage **V5** is kept constant. In particular, when the difference voltage **Vs** is increased from a preceding one, the switching IC **620** increases the duty ratio of the pulse width modulation signal **S2** to reduce the difference voltage **Vs** (to the preceding one). By contrast, when the difference voltage **Vs** is decreased from a preceding one, the switching IC **620** decreases the duty ratio of the pulse width modulation signal **S2** to increase the difference voltage **Vs** (to the preceding one).

For example, the switching device **630** is a field-effect transistor. The switching device **630** has its gate receiving the pulse width modulation signal **S2** from the switching IC **620** via a resistor **635.** Therefore, the switching device **630** is turned on and off in accordance with the duty ratio of the pulse width modulation signal **S2** from the switching controller **62.** While the switching device **630** is turned on, the switching device **630** has its source electrically connected to its drain. Thereby, the inductor **632** continues to accumulate electromagnetic energy. Thereafter, when the switching device **630** is turned off, the inductor **632** discharges the accumulated electromagnetic energy. Thereby, the input voltage **Vin** is raised. The raised input voltage **Vin** is smoothed by the smoothing capacitor **634** and is output to the DC device **92** (see FIG. 1) as the output voltage **Vout.**

When the output current **lout** (the detection voltage **V4**) is increased, the different voltage **Vs** is decreased from a preceding one. In this situation, the switching IC **620** decreases the duty ratio of the pulse width modulation signal **S2** to increase the difference voltage **Vs** to the preceding one. As a result, the output voltage **Vout** (the detection voltage **V5)** is decreased. Meanwhile, when the output current **lout** (the detection voltage **V4)** is decreased, the different voltage **Vs** is increased from a preceding one. In this situation, the switching IC **620** increases the duty ratio of the pulse width modulation signal **S2** to decrease the difference voltage **Vs** to the preceding one. As a result, the output voltage Vout (the detection voltage **V5)** is increased.

That is, as shown in FIG. 5A, the second power device **40** makes a feedback control to keep the difference voltage **Vs** constant, thereby having the output current-output voltage characteristics (a characteristics of keeping Vout+alout constant) of decreasing monotonically (linearly) the output voltage **Vout** of the second power device **40** with an increase of the output current **lout** of the second power device **40.**

The line indicative of the output current-output voltage characteristics of the second power device **40** has an intersection point with a line indicative of the output current-output voltage characteristics of the first power device **30.** Therefore, when the second power device **40** is used in combination with the first power device 30, the output voltages **Vob, Voc,** and **Vod** of the second power devices **40** are coordinated with the output voltage **Voa** of the first power device **30,** respectively (that is, the output voltages **Vob, Voc,** and **Vod** of the second power devices **40** become identical to the output voltage **Voa** of the first power device **30,** respectively). Accordingly, the output currents **Iob, Ioc,** and **Iod** of the second power devices **40** are corresponding to the output voltages **Vob, Voc,** and **Vod** being identical to the output voltage **Voa** of the first power device **30,** respectively.

Herein, when the output currents **Iob, Ioc,** and **Iod** decrease, the output voltages **Vob, Voc,** and **Vod** vary depending on the output current-output voltage characteristics shown in FIG. 6, thereby temporarily increasing, respectively (see (A) in FIG. 6). As seen from the above, when the output voltages **Vob, Voc,** and **Vod** increase, the output currents **Iob, Ioc**, and **Iod** increase, respectively. As a result, the detection voltage **V4** also increases (see (B) in FIG. 6). The duty ratio of the pulse width modulation signal **S2** decreases because the difference voltage **Vs** decreases as the detection voltage **V4** increases. Consequently, the respective output voltages **Vob, Voc,** and **Vod** (detection voltage **V5)** decrease (see (C) in FIG. 6). Thus, the respective output voltages **Vob, Voc,** and **Vod** become identical to the output voltage **Voa.**

Meanwhile, when the output currents **Iob, Ioc**, and **Iod** increase, the output voltages **Vob, Voc,** and **Vod** vary depending on the output current-output voltage characteristics shown in FIG. 6, thereby temporarily decreasing, respectively (see (D) in FIG 6). As seen from the above, when the output voltages **Vob**, **Voc,** and **Vod** decrease, the output currents **Iob, Ioc,** and **Iod** decrease, respectively. As a result, the detection voltage **V4** also decreases (see (E) in FIG. 6). The duty ratio of the pulse width modulation signal **S2** increases because the difference voltage **Vs** increases as the detection voltage **V4** decreases. Consequently, the respective output voltages **Vob, Voc,** and **Vod** (detection voltage **V5**) decrease (see (F) in FIG. 6). Thus, the respective output voltages **Vob, Voc,** and **Vod** become identical to the output voltage **Voa.**

The second power devices **40** repeat the aforementioned operation to make the feed back control for keeping the output current **Iob, Ioc**, and **Iod** constant, respectively.

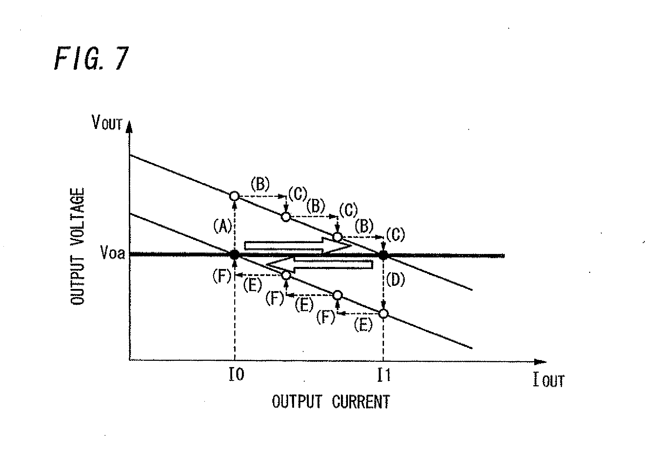

Next, an explanation is made to an adjustment operation by the adjustment unit **64** with reference to FIG. 7.

For example, when a total consumed current (load current) of a side of the DC device **92** increases, the control unit **70** provides to the second power devices **40** the instruction values for increasing the output currents **Iob**, **Ioc**, and **Iod** (that is, the instruction values indicating the targeted output currents **Iob**, **Ioc**, and **Iod** greater than the present output currents **Iob, Ioc**, and **Iod**), respectively.

The CPU **640** of the adjustment unit **64** outputs the output voltage **V6** corresponding to the instruction value received from the control unit **70,** Upon receiving the aforementioned instruction value, the CPU **640** increases the output voltage **V6.** Consequently, the output voltage **V7** also increases, and the voltage **V8** (=β(V7-V4)) also increases. In this situation, since the difference voltage **Vs** (=βV7-(V5+βV4)) increases, the switching controller **620** outputs the pulse width modulation signal **S2** having its greater duty ratio. As a result, the output voltages **Vob**, **Voc**, and **Vod** temporarily exceed the output voltage **Voa** (see (A) in FIG. 7). This operation means adding a predetermined voltage to the output voltage **Vob, Voc,** or **Vod** of the second power device **40**. The predetermined voltage is selected such that, when the second power device **40** gives the output voltage **Vob**, **Voc**, or **Vod** identical to the output voltage **Voa** of the first power device **30** under the varied output current-output voltage characteristics, the second power device **40** gives the output current **Iob, Ioc,** or **Iod** reaching the output current **lout** corresponding to the instruction value. For example, as shown in FIG. 7, when the unadjusted output current is **I0** and the adjusted output current (output current corresponding to the instruction value) is **I1,** the aforementioned predetermined voltage is given by a(I0-I1).

When the output voltages **Vob**, **Voc,** and **Vod** increase by an addition of the predetermined voltage, the output currents **Iob, Ioc**, and I**od** increase, respectively (see (B) in FIG. 7). As a result, the detection voltage **V4** increases. In this situation, since the difference voltage **Vs** decreases, the switching controller **620** outputs the pulse width modulation signal **S2** having its lower duty ratio. Consequently, the output voltages **Vob, Voc,** and **Vod** decrease (see (C) in FIG. 7).

The second power device **40** repeats this operation. Thereby, the output voltages **Vob**, **Voc,** and **Vod** become identical to the output voltage **Voa** in due course, respectively. In this situation, the output currents **Iob, Ioc**, and **Iod** become identical to the output current **lout** according to the instruction value, respectively.

As a result, the adjustment unit **64** makes a translational movement of the line indicative of the output current-output voltage characteristics of the second power device **40** in order to obtain the output current **Iob, Ioc**, or **Iod** respectively at intersections with the line indicative of constant voltage characteristics (the output current-output voltage characteristics of the first power device **30**), thus obtained output current reaching the output current **lout** (**I1**, in FIG. 7) corresponding to the instruction value.

Even after the output current-output voltage characteristics of the second power device **40** are varied, the output voltages **Vob, Voc,** and **Vod** are coordinated with the output voltage **Voa** of the first power device **30,** respectively in a like fashion as the power supply apparatus **10** operates before the output current-output voltage characteristics of the second power device **40** is varied. Therefore, the second power devices **40** output the output currents **Iob**, **Ioc**, and **Iod** at the time when the output voltages **Vob, Voc,** and **Vod** are coordinated with the output voltage **Voa** of the first power device **30,** respectively.

Meanwhile, when the total consumed current (load current) of the side of the DC device **92** decreases, the control unit **70** provides to the second power devices **40** the instruction values for decreasing the output currents **Iob, Ioc,** and **Iod** (that is, the instruction values indicating the targeted output currents **Iob, Ioc**, and **Iod** lower than the present output currents **Iob**, I**oc**, and **Iod**), respectively.

The CPU **640** of the adjustment unit **64** outputs the output voltage **V6** corresponding to the instruction value received from the control unit **70.** In the case of the aforementioned instruction value, the CPU **640** decreases the output voltage **V6.** Consequently, the output voltage **V7** also decreases, and the voltage **V8** (=β(V7-V4)) also decreases. In this situation, since the difference voltage **Vs** (=βV7-(V5+βV4)) decreases, the switching controller **620** outputs the pulse width modulation signal **S2** having its lower duty ratio. As a result, the output voltages **Vob**, **Voc**, and **Vod** temporarily fall below the output voltage **Voa** (see (D) in FIG. 7). Thus, the adjustment unit **64** subtracts the predetermined voltage from the output voltage **Vob, Voc,** or **Vod** of the second power device **40.** This operation means adding a predetermined voltage to the output voltage **Vob, Voc,** or **Vod** of the second power device **40**. The predetermined voltage is selected such that, when the second power device **40** gives the output voltage **Vob, Voc,** or **Vod** identical to the output voltage **Voa** of the first power device **30** under the varied output current-output voltage characteristics, the second power device **40** gives the output current **Iob, Ioc**, or **Iod** reaching the output current **lout** corresponding to the instruction value. For example, as shown in FIG. 7, when the unadjusted output current is **I0** and the adjusted output current (output current corresponding to the instruction value) is **I1**, the aforementioned predetermined voltage is given by a(I0-I1).

When the output voltages **Vob, Voc,** and **Vod** decrease by a subtraction of the predetermined voltage, the output currents **Iob, Ioc,** and **Iod** decrease, respectively (see (E) in FIG. 7). As a result, the detection voltage **V4** decreases. In this situation, since the difference voltage **Vs** increases, the switching controller **620** outputs the pulse width modulation signal **S2** having its greater duty ratio. Consequently, the output voltages **Vob, Voc,** and **Vod** decrease (see (F) in FIG. 7).

The second power device **40** repeats this operation. Thereby, the output voltages **Vob**, **Voc,** and **Vod** become identical to the output voltage **Voa** in due course, respectively. In this situation, the output currents **Iob, Ioc,** and **Iod** become identical to the output current **lout** according to the instruction value, respectively.

As a result, the adjustment unit **64** makes a translational movement of the line indicative of the output current-output voltage characteristics of the second power device **40** in order to obtain the output current **Iob, Ioc,** or **Iod** respectively at intersections with the line indicative of constant voltage characteristics (the output current-output voltage characteristics of the first power device **30**), thus obtained output current reaching the output current **lout** (**I1**, in FIG. 7) corresponding to the instruction value.

Even after the output current-output voltage characteristics of the second power device **40** are varied, the output voltages **Vob, Voc,** and **Vod** are coordinated with the output voltage **Voa** of the first power device **30,** respectively in a like fashion as the power supply apparatus **10** operates before the output current-output voltage characteristics of the second power device **40** is varied. Therefore, the second power devices **40** output the output currents **Iob, Ioc**, and I**od** at the time when the output voltages **Vob**, **Voc,** and **Vod** are coordinated with the output voltage **Voa** of the first power device **30,** respectively.

As seen from the above, the adjustment unit **64** is configured to, when varying the output current-output voltage characteristics, adjust the output voltages **Vob, Voc,** and **Vod,** of the second power device **40** to match a voltage obtained by adding a predetermined voltage to or subtracting the same from the unadjusted output voltages **Vob, Voc,** and **Vod** of the second power device **40** such that the output currents **Iob, Ioc**, and I**od** of the second power device **40** are corresponding to the instruction value while the output voltages **Vob, Voc,** and **Vod** of the second power devices **40** are identical to the output voltage **Voa** of the first power device **30** concerning the varied output current-output voltage characteristics.

As described in the above with reference to the present embodiment, each of the second devices **40** can, in response to a varying load current, vary its output current-output voltage characteristics on the basis of the instruction value received from the control unit **70,** as shown in FIG. 7. Even after the output current-output voltage characteristics are varied, the second power devices **40** provides their output voltages **Vob**, **Voc,** and **Vod** all identical to the output voltage **Voa** of the first power device **30.** Therefore, the second power devices **40** provide their output currents **Iob, Ioc**, and I**od** which are in correspondence to the output voltages **Vob, Voc,** and **Vod,** and are all identical to the output voltage **Voa** of the first power device **30.** Consequently, even if the load current is varied, the power supply apparatus **10** can select the magnitudes of the output currents **Iob, Ioc**, and I**od** for each of the second power devices **40** in match with the load current, respectively. In addition, the output voltages **Vob, Voc,** and **Vod** can be kept constant because the second power devices **40** have their output voltages **Vob, Voc,** and **Vod** kept identical to the output voltage **Voa** of the first power device **30** even if the load current changes its magnitude. As a result, it is possible to make stable power supply for the DC device **92.**

Following shows an instance. FIG. 5A shows the output current-output voltage characteristics of the second power device **40,** and FIG. 5B shows the output current-output voltage characteristics of the first power device **30.** When the second power device **40** receives the instruction value corresponding to the output current **I₁₁** from the control unit **70** while the output current **lout** is **I₁₂,** the line indicative of the output current-output voltage characteristics of the second power device **40** is translated as indicated by an arrow in FIG. 5C. As a result, the output current **lout** of the second power device **40** is increased from **I₁₂** to **I₁₁.**

Additionally, in the present embodiment, the first power device **30** receives the source voltage from the commercial power source **81** supplying stable power. Therefore, it is possible to reduce an influence of a load variation caused by an on-off operation of the DC device **92.** Thus, it is possible to make more stable power supply for the DC device **92.** By contrast, when the first power device **30** is connected to the solar cell **82,** the power supply for the DC device 92 becomes unstable due to solar insolation. When the first power device **30** is connected to the secondary cell **83,** the power supply for the DC device **92** becomes unstable due to a charging status of the secondary cell **83.**

By the way, most parts of the first power device **30** is common to the second power device **40.** Therefore, the second power device **40** can be manufactured by sharing most parts of the first power device **30** only with exception of few additional parts. Therefore, the second power device **40** can be implemented only by slight modification to the configuration of the first power device **30.**

Moreover, when a voltage drop caused by a wire (DC supply line **93)** is not negligible, the first power device **30** may be configured to preliminarily increase its output voltage **Voa** to supplement the voltage drop. With this modification, the output voltages **Vob, Voc,** and **Vod** of the second power devices **40** are also increased depending on the output voltage **Voa** of the first power device **30.** Therefore, it is possible to adjust a voltage applied to the DC device 92 to a proper voltage. This modification can be applied to following second to ninth embodiments.

### (second embodiment)

By the way, the second power devices **40** of the first embodiment adjust its output currents **Iob, Ioc**, and I**od** by translating the line indicative of the output current-output voltage characteristics, respectively.

However, if an error occurs due to a variation of the output voltage **Voa** of the first power device **30,** or if a conversion error occurs at the time of converting the instruction value of the control unit **70** into the output voltage **V6,** the second power devices **40** provide the actual output currents **Iob, Ioc,** and I**od** which may not reach the output current **Iout** corresponding to the instruction value of the control unit **70.**

Therefore, it is desired to improve an accuracy of the output currents **Iob, Ioc**, and I**od** of the second power devices **40** (reduce an error between the actual output current and the output current corresponding to the instruction value).

In view of the above, the second power devices **40A** of the power supply apparatus **10A** of the present embodiment have a function of reducing an error between the output currents **Iob**, **Ioc,** and **Iod** detected by the current detector **60** and the output current **lout** corresponding to the instruction value of the control unit **70.**

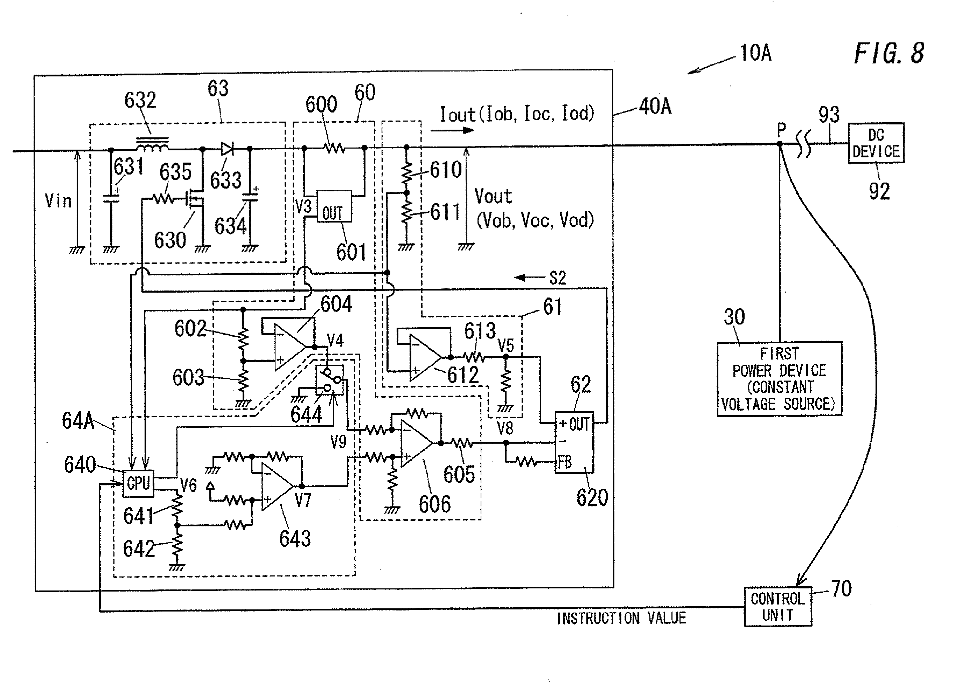

As shown in FIG. 8, in the adjustment unit **64A** of the present embodiment, the CPU **640** is configured to obtain a detection result (detection voltage **V3)** of the current detector **60** and a detection result of the voltage detector **61.** Upon receiving the detection voltage **V3,** the CPU **640** is configured to calculate the error between the actual output current **lout** and the output current **lout** corresponding to the instruction value on the basis of the detection voltage **V3** and the instruction value of the control unit **70.** For example, in the case of the instruction value of the control unit **70** being a current value, the CPU **640** converts the magnitude of the detection voltage **V3** to a current value, and calculates the error between the converted current value and the instruction value of the control unit **70.**

Upon calculating the error, the CPU **640** adjusts the output voltage **V6** to reduce the calculated error. Thus, the output current-output voltage characteristics of the second power device are corrected. That is, the adjustment unit **64A** is configured to correct the output current-output voltage characteristics such that the output currents **Iob, Ioc,** and I**od** detected by the current detector **60** become identical to the output current **Iout** corresponding to the instruction value.

The power supply apparatus **10A** of the present embodiment feeds back the actual output currents **Iob, Ioc,** and **Iod,** and corrects the error between the actual output currents **Iob, Ioc,** and **Iod** and the output current **Iout** corresponding to the instruction value. Therefore, it is possible to improve the accuracy of the output current **Iout** of the second power device **40A.**

### (third embodiment)

By the way, the second power device **40** of the power supply apparatus **10** of the first embodiment has its output current-output voltage characteristics of decreasing monotonically the output voltage **Vout** of the second power device **40** with an increase of the output current **Iout** of the second power device **40.** Conversely, the second power device **40** has its output voltage **Vout** increased monotonically as its output current **Iout** decreases. Therefore, when the output currents **Iob**, **Ioc,** and **Iod** is decreased as the load current decreases, the output voltages **Vob**, **Voc,** and **Vod** become high. Thereby, a relatively high voltage is likely to be applied to the DC device **92.**

In view of the above, the power supply apparatus **10** of the present embodiment is configured to vary the output current-output voltage characteristics (inclination control characteristics) of the second power device **40** such that the output voltages **Vob** to **Voc** do not exceed a predetermined threshold. Additionally, a basic configuration of the power supply apparatus **10** of the present embodiment **10** is common to the power supply apparatus of the first embodiment. Therefore, the drawings used for an explanation of the power supply apparatus **10** of the first embodiment are also used for explanation of the power supply apparatus **10** of the present embodiment.

In the power supply apparatus **10** of the present embodiment, the adjustment unit **64** is configured to modify the output current-output voltage characteristics of the second power device **40,** and the control unit **70** is configured to instruct the adjustment unit **64** to modify the output current-output voltage characteristics of the second power device **40.**

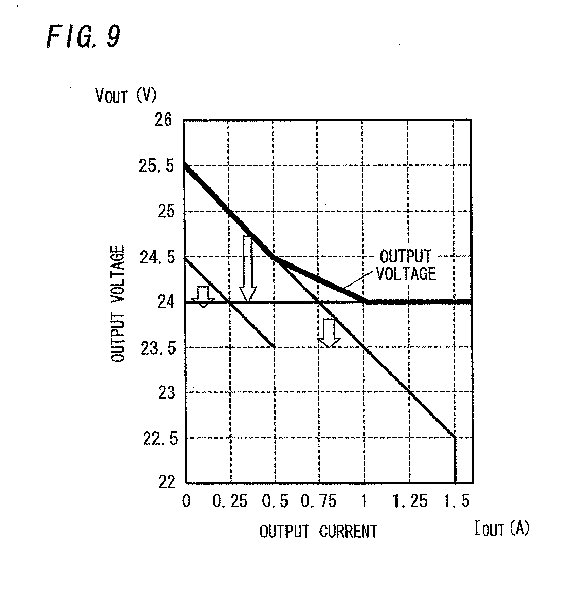

For example, it is assumed that the output voltage **Vout** (**Vob**, **Voc, Vod)** of the second power device **40** exceeds the output voltage **Vout** (**Voa**) of the first power device **30** due to a decrease of the output current **Iout (Iob, Ioc, Iod**) of the second power device **40.** In this situation, as shown in FIG. 9, the power supply apparatus of the present embodiment modifies the output current-output voltage characteristics of the second power device **40** such that the output voltages **Vout** (**Vob, Voc, Vod**) of the second power device **40** becomes identical to the output voltage **Vout (Voa)** of the first power device **30.**

The control unit **70** of the present embodiment is configured to monitor a voltage (output voltage of the power supply apparatus) of a power source connection point **P.** The control unit **70** is configured to send a configuration output voltage instruction to the second power device **40** such that the output voltages **Vob** to **Vod** of the second power devices **40** become identical to the output voltage **Voa** when the voltage of the power source connection point **P** exceeds the output voltage **Voa** of the first power device **30**.

Upon receiving the configuration output voltage instruction, the adjustment unit **64** of the present embodiment is configured to vary the output current-output voltage characteristics while deceasing the output voltage **Vout** monotonically with the increase of the output current **lout** in order to provide the output voltage **Vout** which is associated with the output current **lout** being supplied to the DC device, and which becomes equal to the output voltage **Voa** of the first power device **30.**

According to the power supply apparatus **10** of the present embodiment, it is possible to restrain an increase of the output voltage **Vout (Vob, Voc, Vod)** of the second power device **40** even if the load current decreases its magnitude. Therefore, it is possible to restrain the DC device **92** from receiving the high voltage.

### (fourth embodiment)

The power supply device **10** of the third embodiment varies the output current-output voltage characteristics of the second power device **40** when the load current immediately becomes low, thereby preventing the DC device **92** from receiving the high voltage. However, in the power supply apparatus **10** of the third embodiment, the output voltages **Vob, Voc,** and **Vod** is likely to temporally increase prior to completion of variation of the output current-output voltage characteristics. Thereby the high voltage is likely to be applied to the DC device **92.**

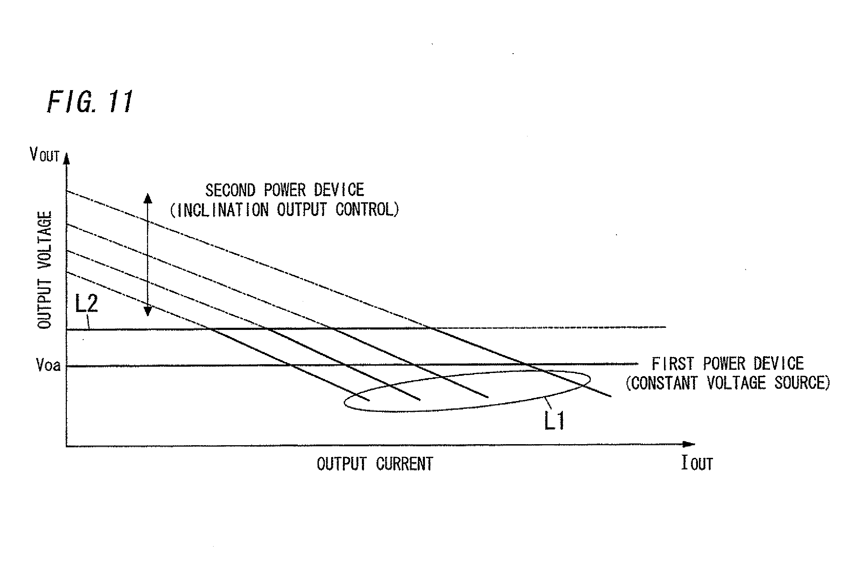

In view of the above, in the power supply apparatus **10B** of the present embodiment, as shown in FIG. 11, the adjustment unit **64B** of the second power device 40 is configured to vary the output current-output voltage characteristics such that the output current-output voltage characteristics of the second power device **40** become the constant voltage characteristics (that is, the output current-output voltage characteristics of keeping the output voltage of the second power device constant irrespective of a magnitude of the output current of the second power device **40).**

Consequently, the second power device **40B** has the output current-output voltage characteristics (hereinafter referred to as "first output characteristics", in the present embodiment) **L1** of decreasing monotonically the output voltage of the second power device **40B** with an increase of the output current of the second power device **40B**, and the output current-output voltage characteristics (hereinafter referred to as "second output characteristics", in the present embodiment) **L2** of keeping the output voltage of the second power device **40B** constant irrespective of a magnitude of the output current of the second power device **40B**. The first output characteristics **L1** represent the output current - output voltage characteristics to reflect a situation where the output voltage **Vout** is in a relatively low range and the output current **lout** is in a relatively high range. The second output characteristics **L2** represent the same to reflect a situation where the output current **lout** is in a relatively low range. Components which are common to the power supply apparatus **10** of the present embodiment and the power supply apparatus **10** of the first embodiment are indicated with the same reference numerals as the first embodiment, and no explanation thereof is deemed necessary.

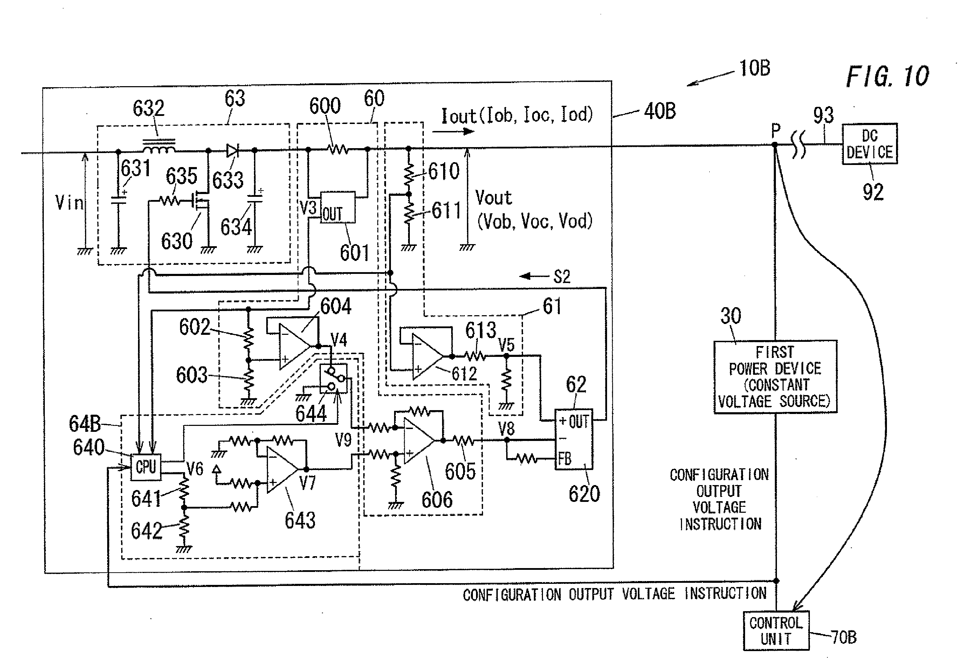

As shown in FIG. 10, the adjustment unit **64B** includes a selection switch **644** to switch between the first output characteristics **L1** and the second output characteristics **L2.**

The selection switch **644** is configured to switch a destination of the non-inverting input terminal of the differential amplifier circuit **604** between an output terminal (voltage follower **604** side) of the voltage follower **604** and a ground (ground side). That is, in the power supply apparatus **10B** of the present embodiment, the differential amplifier circuit **606** has its input voltage **V9** selected from the detection voltage **V4** and 0V.

When the selection switch **644** is switched from the ground side to the voltage follower **604** side, the input voltage **V9** becomes the detection voltage **V4** indicative of the magnitude of the output current **Iob, Ioc**, or **Iod**. As a result, the output current-output voltage characteristics of the second power device **40B** become the first output characteristics **L1**. When the selection switch **644** is switched to the ground side from the voltage follower **604** side, the input voltage **V9** becomes constant irrespective of the magnitude of the output current **lout.** Therefore, the output current-output voltage characteristics of the second power device **40B** become the second output characteristics **L2.**

The selection switch **644** is controlled by the CPU **640.** The CPU **640** is configured to control the selection switch **644** on the basis of a comparison result of the output voltages **Vob, Voc**, and **Vod** and a prescribed threshold (the output voltages **Vob, Voc,** and **Vod** of the second output characteristics **L2,** in the present embodiment). The CPU **640** of the present embodiment keeps the selection switch **644** switched to the voltage follower **604** side while the output voltages **Vob**, **Voc,** and **Vod** are less than the prescribed threshold. By contrast, the CPU **640** of the present embodiment switches the selection switch **644** to the ground side from the voltage follower **604** side when the output voltages **Vob, Voc,** and **Vod** become identical to the prescribed threshold. The output voltages **Vob** to **Vod** of the second output characteristics **L2** are selected to be a trouble-free voltage in view of the source voltage of the DC device **92.**

As seen from the above, the adjustment unit **64B** is configured to switch the output current-output voltage characteristics from the first output characteristics **L1** to the second output characteristics **L2** when the output voltage Vout becomes identical to the prescribed threshold.

Therefore, the power supply apparatus **10B** of the present embodiment can restrain the surges of the output voltages **Vob, Voc,** and **Vod** of the second power devices **40B** when the load current decreases suddenly. Therefore, the voltage applied to the DC voltage **92** can be restrained from excessively increasing.

In addition, the output voltages **Vob, Voc,** and **Vod** of the second characteristics **L2** are slightly higher than the output voltage **Voa** of the first power device **30.** Consequently, it is possible to reduce a voltage rise even if the output currents **Iob, Ioc**, and I**od** as the load current decreases. Therefore, it is possible to restrain the DC device **92** from receiving a high voltage.

Moreover, in the power supply apparatus **10B** of the present embodiment, although the second output characteristics **L2** are the constant voltage characteristics, the second output characteristics **L2** may be the output current-output voltage characteristics having its gradient smaller than that of the first output characteristics **L1**. That is, the adjustment unit **64B** may be configured to modify the output current-output voltage characteristics of the second power device **40B** to reduce an increase rate of the output voltage **Vout** relative to a decrease of the output current **lout** when the output voltage **Vout** of the second power device **20** reaches the predetermined threshold.

### (fifth embodiment)

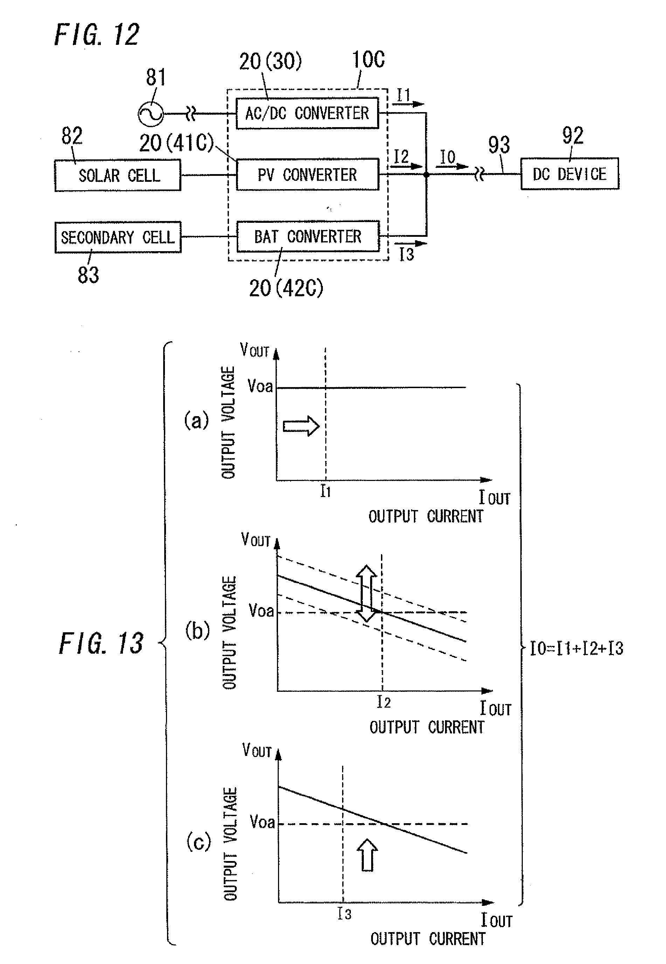

The power supply apparatus **10C** of the present embodiment is configured to make efficient use of the solar cell **82.** As shown in FIG. 12, the power supply apparatus **10C** includes the first power device (hereinafter referred to as "AC/DC converter", in the present embodiment) **30** to be connected to the commercial power source **81.** In addition, the power supply apparatus **10C** includes the second power device (hereinafter referred to as "PV converter", in the present embodiment) **41C** to be connected to the solar cell **82** and the second power device (hereinafter referred to as "BAT converter", in the present embodiment) **42C** to be connected to the secondary cell **83.**

The PV converter **41C** has its configuration similar to the second power device **41** of the first embodiment. In addition, the PV converter **41C** is configured to adjust its output current **lout** such that an output power of the solar cell **82** reaches its maximum in an available supply range where the solar cell **82** is able to supply an electric power. In this situation, the output current **lout** can be calculated by use of current-voltage characteristics of the solar cell 82 and the output voltage of the AC/DC converter **30**. In a following explanation, it is assumed that the output current **lout** at the time that the output power of the solar cell **82** attains its maximum in the available supply range has its current value of **I2**.

Further, the output current **lout** of the PV converter 4**1C** is adjusted by varying the output current-output voltage characteristics. The PV converter **41C** varies its output current-output voltage characteristics (see FIG. 13 (b)) such that an output power of the solar cell **82** reaches its maximum in the available supply range of the solar cell **82.** A modification of the output current-output voltage characteristics of the PV converter **41C** is realized by use of the aforementioned adjustment unit **64.** According to the aforementioned operation, the PV converter **41C** supplies its output current **lout** having its current value of **I2** to the DC device **92.**

Moreover, the PV converter **41C** is configured to charge the secondary cell **83** by use of an excess of its output current **lout** when its output current **lout** exceeds the load current (it is assumed that the current value of the load current is **I0**), that is, I2>I0.

The BAT converter **42C** has its configuration similar to the second power device **42** of the first embodiment, In addition, the BAT converter **42C** is configured to operate while the load current exceeds the output current **lout** of the PV converter **41C** (that is, I0>I2). In this situation, the BAT converter **42C** is configured to provide the output current **lout** which has its current value **I3** (=I0-I2) to supplement a shortage of the load current. The output current **lout** of the BAT converter **42C** is adjusted by modifying the output current-output voltage characteristics. As shown in FIG. 13 (c), when the load current **I0** exceeds the output current **I2** of the PV converter **41C,** the BAT converter **42C** varies its output current-output voltage characteristics under the condition where the output voltage **Vout** decreases monotonically as the output current **lout** increases, thereby providing the output current **lout** having its current value of **I3** to supplement the shortage of the load current. A modification of the output current-output voltage characteristics of the BAT converter **42C** is realized by use of the aforementioned adjustment unit **64.** According to the aforementioned operation, the BAT converter **42C** supplies its output current **lout** having its current value of **I3** (=I0-I2) to the DC device **92.**

The BAT converter **42C** has an upper limit of the output current **lout.** Therefore, when the load current increases (that is, the case of I0>I2+I3), the BAT converter **42C** may fail to supplement the shortage even when the output current **lout** is its maximum.

In this situation, the AC/DC converter **30** supplies an electrical power to the DC device **92.** More particularly, as shown in FIG. 13 (a), the AC/DC converter **30** supplies the output current **lout** having its current value **I1** (=I0-12-13) to the DC device **92.**

The power supply apparatus **10C** of the present embodiment supplies the output current **lout** of the PV converter **41C** to the DC device **92** and charges the secondary cell **83** with the output current **lout**, thereby enabling efficient use of the solar cell **82.** In addition, since the AC/DC converter **30** operates to provide a minimum output current **lout,** it is possible to reduce the commercial power source **81** as much as possible, thereby accomplishing energy saving.

Moreover, although the load current **I0** is kept constant, the output current-output voltage characteristics may be changed in accordance with a supply capacity of the power source (e.g. the solar cell **82)** to be connected to the second power device **40.** For example, when the supply capacity of the solar cell **82** becomes low, the AC/DC converter **30,** the PV converter **41C,** and the BAT converter **42C** may be made to alter the individual output current-output voltage characteristics in such a manner as to render the output current **lout** of the PV converter **41C** less than the current value **I2**, to render the output current **lout** of the BAT converter **42** greater than the current value **I3** by an extent of the decreased current value **I2**, or to render the output current **lout** of the AC/DC converter **30** greater than the current value **I1**.

### (sixth embodiment)

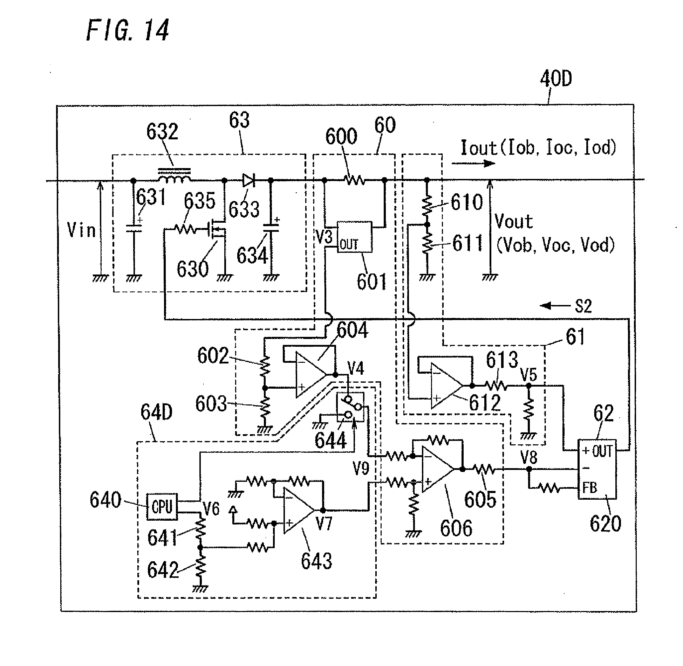

As shown in FIG. 14, the power supply apparatus **10D** of the present embodiment is different from that of the first embodiment (see FIG. 4) in that each of the second power devices **40D** have their adjustment unit **64D** provided with the selection switch **644.** Components which are common to the power supply apparatus **10D** of the present embodiment and the power supply apparatus **10** of the first embodiment are indicated with the same reference numerals as the first embodiment, and no explanation thereof is deemed necessary.

The selection switch **644** is used for switching between a variable voltage mode and a constant voltage mode. Herein, the variable voltage mode is a mode where the output voltage **Vout (Vob, Voc, Vod)** is a DC voltage which decreases monotonically as the output current **lout (Iob, Ioc**, **Iod**) increases. The constant voltage mode is a mode where the output voltage **Vout (Vob, Voc, Vod)** is kept constant irrespective of the magnitude of the output current **lout (Iob, Ioc**, **Iod).** It is noted that the output voltages **Vob, Voc,** and **Vod** of the constant voltage mode may be identical to the output voltage **Voa** of the first power device **30.** Consequently, even if a device having a constant output voltage **Vout** is switched from the first power device **30** to the second power device **40D,** no change is seen in the supplied voltage to the DC device **92.** Therefore, it is possible to successfully supply an electric power to the DC device **92.**

The selection switch **644** is configured to switch the destination of the non-inverting input terminal of the differential amplifier circuit **604** between the output terminal (voltage follower **604** side) of the voltage follower **604** and the ground (ground side). That is, in the present embodiment, the differential amplifier circuit **606** has its input voltage **V9** selected from the detection voltage **V4** and 0V.

When the selection switch **644** is switched from the ground side to the voltage follower **604** side, the input voltage **V9** becomes the detection voltage **V4** indicative of the magnitude of the output current **Iob, Ioc**, or **Iod**. As a result, the second power device **40D** is switched from the constant voltage mode to the variable voltage mode. In this situation, the output current-output voltage characteristics of the second power device **40D** become the same characteristics as that of the second power device **40** of the first embodiment. By contrast, when the selection switch **644** is switched to the ground side from the voltage follower **604** side, the input voltage **V9** becomes constant irrespective of the magnitude of the output current **lout.** Therefore, the second power device **40D** is switched from the variable voltage mode to the constant voltage mode. In this situation, the output current-output voltage characteristics of the second power device **40D** become the same characteristics as that of the first power device **30** of the first embodiment. In addition, the output voltages **Vob, Voc,** and **Vod** of the second power device **40D** at the constant voltage mode are identical to the output voltage **Voa** of the first power device **30.** Therefore, it is possible to successfully supply an electric power to the DC device **92.**

The selection switch **644** is controlled by the CPU **640.** In other words, the CPU **640** and the selection switch **644** constitute a switching unit configured to switch an operation mode of the second power device **40D** between the constant voltage mode and the variable voltage mode.

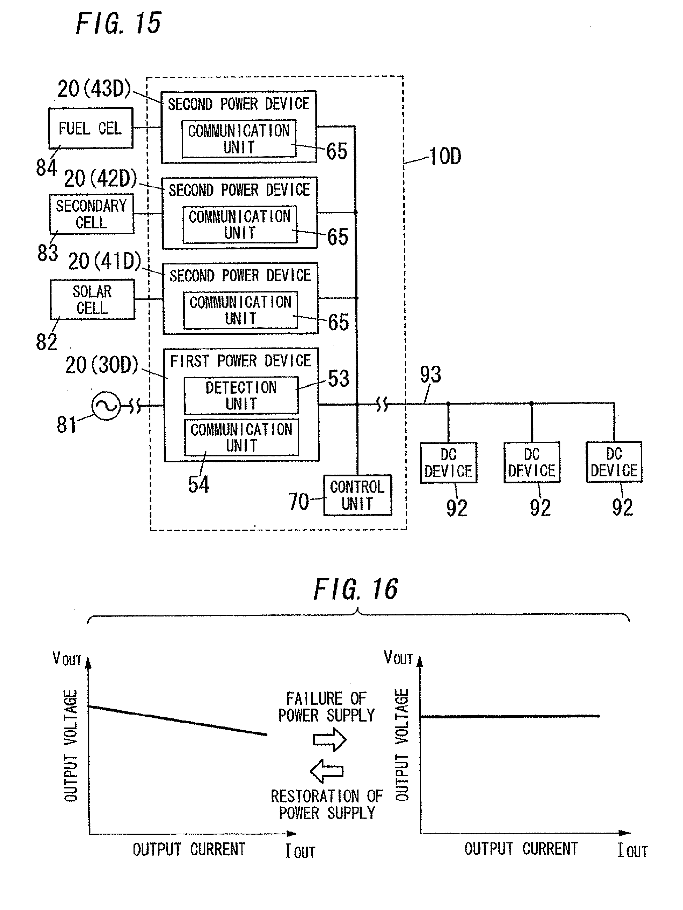

As shown in FIG. 15, the first power device **30D** includes a detection unit **53** configured to detect a failure or a restoration of power supply of the commercial power source **81**, and a communication unit **54** configured to communicate with the second power device **40D** and the control unit **70.** The communication unit **54** is a transmitting means configured to transmit a detection result (e.g. a failure detection result and a restoration detection result) of the detection unit **53** to the second power device **40D**.

The second power device **40D** includes a communication unit **65** configured to communicate with the first power device **30D**, the other second power devices **40D**, and the control unit **70,** in addition to the selection switch **644**. The communication unit **65** is a receiving means configured to receive a signal from an external device. Further, the second power devices **40D** are preliminary determined to have an order (rank) of being switched from the variable voltage mode to the constant voltage mode.

Next, an explanation is made to an operation of the power supply apparatus **10D** of the present embodiment. In order to maintain a power supplied to the DC device **92** as a consequence of the first power device **30D** detecting the failure of power supply of the commercial power source **81,** the communication unit **54** of the first power device **30D** sends the failure detection result (failure detection signal) to the second power device **40D** (e.g. the second power device **43D,** in this situation) having the highest rank. In the second power device **43D,** when the communication unit **65** receives the failure detection signal from the first power device **30D**, the CPU **640** switches the selection switch **644** to the ground side. Thereby, the second power device **43D** is switched from the variable voltage mode to the constant voltage mode.

As seen from the above, the second power device **43D** makes the constant voltage control, thereby keeping its output voltage Vout constant. Therefore, in a like manner as the first power device **30D** supplies an electrical power to the DC device **92,** it is possible to successfully make power supply to the DC device **92.**

Meanwhile, when the first power device **30D** detects the restoration of power supply of the commercial power source **81**, the communication unit **54** of the first power device **30D** sends the restoration detection result (restoration detection signal) to the second power device **43D.** In the second power device **43D**, when the communication unit **65** receives the restoration detection signal from the first power device **30D**, the CPU **640** switches the selection switch **644** to the voltage follower **604** side. Thereby, the second power device **43D** is switched from the constant voltage mode to the variable voltage device.

As described in the above, in the power supply apparatus **10D** of the present embodiment, when the commercial power source **81** connected to the first power device **30D** breaks down or is restored, the output current-output voltage characteristics of the second power device **43D** are switched, as shown in FIG. 16.

As seen from the above, according to the power supply apparatus **10D** of the present embodiment, when the commercial power source **81** connected to the first power device **30D** making the constant voltage control breaks down, the second power device **43D** is switched to the constant voltage mode from the variable voltage mode. In this situation, the second power device **43D** makes the constant voltage control, thereby keeping its output voltage **Vout** constant. That is, since the second power device **43D** substitutes for the first power source **30D,** in a like manner as the first power device **30D** supplies an electrical power to the DC device **92,** it is possible to successfully make power supply to the DC device **92.**

When the commercial power source **81** is restored after its blackout, the second power device **43D** is switched to the variable voltage mode from the constant voltage mode, thereby returning to its previous status before the commercial power source **81** breaks down. Therefore, the first power device **30D** can supply the constant voltage again. It is possible to make stable power supply because the commercial power source **81** connected to the first power device **30** is a power source which provides stable power relative to the solar cell **82,** the secondary cell **83,** and the fuel cell **84** connected to the second power device **40D.**

In the power supply apparatus **10D** of the present embodiment, the second power device **43D** is switched to the constant voltage mode from the variable voltage mode when the commercial power source **81** connected to the first power device **30D** breaks down. However, either the second power device **41**D or **42D** may be switched to the constant voltage mode from the variable voltage mode instead of the second power device **43D.** In brief, it is sufficient that any one of the second power devices **40D** is switched to the constant voltage mode from the variable voltage mode.

In the power supply apparatus **10D** of the present embodiment, the first power device **30D** directly sends the failure detection signal and the restoration detection signal to the second power device **43D** having the highest rank. However, the first power device **30D** may send the failure detection signal and the restoration detection signal to the control unit **70,** and the control unit **70** may send the received failure detection signal and the received restoration detection signal to the second power device **43D.**

In the power supply apparatus **10D** of the present embodiment, all the second power devices **40D** include the selection switch **644** and the communication unit **65**. However, all the second power devices **40D** do not need to include the selection switch **644** and the communication unit **65.** In other words, the second power devices **40D** having the selection switch **644** and the communication unit **65** may be preliminary determined to have the order (rank) of being switched from the variable voltage mode to the constant voltage mode.

### (seventh embodiment)

As shown in FIG. 17, the power supply apparatus **10E** of the present embodiment is different from the power supply apparatus **10D** of the sixth embodiment in that each of the second power devices **40E** includes a detection unit **66.** Besides, like the sixth embodiment, the power supply apparatus **10E** is configured to preliminary determine the order (rank) of the second power devices **40E** being switched from the variable voltage mode to the constant voltage mode. Further, components which are common to the power supply apparatus **10E** of the present embodiment and the power supply apparatus **10D** of the sixth embodiment are indicated with the same reference numerals as the sixth embodiment, and no explanation thereof is deemed necessary.

The detection unit **66** is configured to detect an amount of available electrical power of a power source connected to the second power device **40E**. That is, the detection unit 66 of the second power device **41E** detects an amount of available electrical power of the solar cell **82,** and the detection unit **66** of the second power device **42E** detects an amount of available electrical power of the secondary cell **83,** and the detection unit **66** of the second power device **43E** detects an amount of available electrical power of the fuel cell **84.**

In the second power device **40E,** the communication unit **65** is defined as a second transmitting means configured to transmit an available amount detection result of the detection unit **66** to the other second power devices **40E.**

Next, an explanation is made to an operation of the power supply apparatus **10E** of the present embodiment. First, it is assumed that the commercial power source **81** breaks down, and that therefore the second power device **43E** is switched from the variable voltage mode to the constant voltage mode in a like manner as the sixth embodiment. In this situation, when the detection unit **66** detects the amount of available electrical power being not greater than a threshold, the second power device **43E** sends the available amount detection result to the other second power devices **41**E and **42E** by the communication unit **65.**

Concerning the other second power devices **41E** and **42E,** at the second power device **40E** (e.g. the second power device **42E,** in this situation) having its rank next to the second power device **43E,** when the communication unit **65** receives the available amount detection result of the second power device **43E,** the CPU **640** switches the selection switch **644** to the ground side. Consequently, the second power device **42E** having its rank next to the second power device **43E** is switched from the variable voltage mode to the constant voltage mode. By contrast, the second power device **41**E keeps the variable voltage mode even if the communication unit **65** receives the available amount detection result of the second power device **43E** because the second power device **41**E has its rank not next to the second power device **43E.**

As seen from the above, according to the power supply apparatus **10E** of the present embodiment, the second power device **43E** having the highest rank is switched to the constant voltage mode from the variable voltage mode when the commercial power source **81** connected to the first power device **30D** breaks down. Thereby, the second power device **43E** keeps its output voltage **Vout** constant (a voltage identical to the output voltage **Voa** of the first power device **30D**). In other words, the second power device **43E** substitutes for the first power device **30D**. Further, in this situation, when the power source (fuel cell **84)** connected to the second power device **43E** has its amount of available electrical power decreased, the second power device **42E** having its rank next to the second power device **43E** is switched to the constant voltage mode from the variable voltage mode. Thereby, the second power device **42E** keeps its output voltage **Vout** constant (a voltage identical to the output voltage **Voa** of the first power device **30D**). In other words, the second power device **42E** substitutes for the first power device **30D**.

Therefore, even if the commercial power source **81** breaks down, in a like manner as the first power device **30D** supplies an electrical power to the **DC** device **92,** the power supply apparatus **10E** can make stable power supply to the DC device **92.**

In the aforementioned instance, the second power device **43E** directly sends the available amount detection result to the second power device **42E** having its rank next to the second power device **43E.** However, the second power device **43E** may send the available amount detection result to the control unit **70,** and the control unit **70** may send the received available amount detection result to the second power device **42E.**

In the power supply apparatus **10E** of the present embodiment, all the second power devices **40E** include the selection switch **644** and the communication unit **65.** However, all the second power devices **40E** do not need to include the selection switch **644** and the communication unit **65.** In other words, the second power devices **40E** having the selection switch **644** and the communication unit **65** may be preliminary determined to have the order (rank) of being switched from the variable voltage mode to the constant voltage mode.

### (eighth embodiment)

As shown in FIG. 18, the power supply apparatus **10F** is different from the power supply apparatus **10E** of the seventh embodiment in configurations of the first power device **30F** and the second power devices **40F.**

The first power device **30F** includes a storage unit **55.** The first power device **30F** is configured to collect information of the amount of available electrical power from all the second power devices **40F** and store the collected information in the storage unit **55.** Components which are common to the power supply apparatus **10F** of the present embodiment and the power supply apparatus **10E** of the seventh embodiment are indicated with the same reference numerals as the seventh embodiment, and no explanation thereof is deemed necessary.

The second power device **40F** includes a detection unit **67** and a storage unit **68.** The detection unit **67** is configured to detect an amount of available electrical power of a power source (that is, the solar cell **82** in the case of the second power device **41F,** the secondary cell **83** in the case of the second power device **42F,** the fuel cell **84** in the case of the second power device **43F)** which is connected thereto. The communication unit **65** sends the information of the amount of available electric power detected by the detection unit **67** to the first power device **30F**. Further, the second power device **40F** is configured to obtain the information of the amount of available electric power from all the power devices **20** and store the obtained information in the storage unit **68.**

Next, an explanation is made to an operation of the power supply apparatus **10F** of the present embodiment. When the communication unit **54** receives the information of the amount of available electric power from all the second power devices **40F,** the first power device **30F** stores the received information of the amount of available electric power in the storage unit **55.** Thereafter, when the detection unit **53** of the first power device **30F** detects the failure of power supply of the commercial power source **81,** the first power device **30F** controls the communication unit **54** to send the failure detection result of the detection unit **53** to the second power device **40F.** Herein, the second power device **40F** as a destination of the failure detection result is selected by use of the information of the amount of available electric power stored in the storage unit **55.** In more detail, the first power device **30F** refers to the information of the amount of available electric power stored in the storage unit **55** so as to select the second power device **40F** (e.g. the second power device **42F,** in this situation) affording the largest amount of available electric power from the second power devices **40F** as the destination one to which the failure detection result is transmitted.

When the communication unit **65** of the second power device **42F** receives the failure detection result, the CPU **640** of the second power device **42F** switches the selection switch **644** to the ground side. Thereby, the second power device **42F** is switched to the constant voltage mode from the variable voltage mode.

Thereafter, the second power device **42F** substitutes for the first power device **30F.** Subsequently, when the amount of available electric power of the secondary cell **83** falls below the threshold, the second power device **42F** controls the communication unit **65** to send the available amount detection result of the detection unit **66** to the other second power device **40F.** Herein, the second power device **40F** as a destination of the available amount detection result is selected by use of the information of the amount of available electric power stored in the storage unit **68.** In more detail, the second power device **42F** refers to the information of the amount of available electric power stored in the storage unit **68** so as to select the second power device **40F** (e.g. the second power device **43F**, in this situation) affording the largest amount of available electric power from the second power devices **41F** and **43F** as the destination one to which the failure detection result is transmitted.

When the communication unit **65** of the second power device **43F** receives the failure detection result, the CPU **640** of the second power device **43F** switches the selection switch **644** to the ground side. Thereby, the second power device **43F** is switched to the constant voltage mode from the variable voltage mode.

Consequently, thereafter, the second power device **43F** substitutes for the first power device **30F.**

As described in the above, according to the power supply apparatus **10F** of the present embodiment, the second power device **42F** having the largest amount of available electric power is switched from the variable voltage mode to the constant voltage mode when the commercial power source **81** fails to supply power. Therefore, by comparison with the instance where the order is preliminarily determined as in the seventh embodiment, it is possible to decrease the switching number of times that the second power device **40F** having its output voltage **Vout** kept constant (the number of times that the second power device **40F** is switched from the variable voltage mode to the constant voltage mode). Consequently, it is possible to suppress an occurrence of a failure (e.g. a decrease of efficiency and/or stability of whole system) caused by the switching between the variable voltage mode and the constant voltage mode. As a result, it is possible to successfully make power supply to the DC device **92.**

In the power supply apparatus **10F** of the present embodiment, each of the power devices **20** includes the storage unit (the first power device **30F** includes the storage unit **55** and the second power devices 40F include the storage unit **68).** Herein, the power supply apparatus **10F** including the control unit **70** with a storage unit (not shown) is exemplified as a modification of the power supply apparatus **10F** of the present embodiment. With this modification, the communication unit **65** sends the information of the amount of available electric power detected by the detection unit **67** to the control unit **70.** In addition, the control unit **70** sends the available amount detection result to the second power device **40F** having the largest amount of available electric power at that time, with reference to the information of the amount of available electric power stored in its storage unit.

In the power supply apparatus **10F** of the present embodiment, all the second power devices **40F** include the selection switch **644** and the communication unit **65.** However, all the second power devices **40F** do not need to include the selection switch **644** and the communication unit **65**. In this situation, the first power device **30F** is configured to periodically receive the information of the amount of available electric power from the second power devices **40F** having the selection switch **644** and the communication unit **65,** and store the received information of the amount of available electric power in the storage unit **55.** When the detection unit **53** of the first power device **30F** detects the failure of the commercial power source **81**, the first power source **30F** controls the communication unit **54** to send the failure detection result of the detection unit **53** to the second power device **40F.** Herein, the second power device **40F** as a destination of the available amount detection result is selected with reference to the information of the amount of available electric power stored in the storage unit **55.** In short, the destination of the available amount detection result is selected from the second power devices **40F** having the selection switch **644** and the communication unit **65.**

### (ninth embodiment)

As shown in FIG. 19, the power supply apparatus **10G** of the present embodiment includes a total of the four power devices **20,** that is, the one first power device **30G**, and the three second power devices **41D**, **42G**, and **43D**.

It is noted that the first power device **30G** is configured to be activated by the secondary cell **83** as its power source. Further, the second power device **42G** is configured to be activated by the commercial power source **81** as its power source. That is, according to the power supply device **10G,** the power device connected to the secondary cell **83** is the first power device, and the power device connected to the commercial power source **81** is the second power device. The second power devices **41D** and **43D** are the same as those of the sixth embodiment. In addition, components which are common to the power supply apparatus **10G** of the present embodiment and the power supply apparatus **10D** of the sixth embodiment are designated by the same reference numerals as the sixth embodiment, and no explanation thereof is deemed necessary.

Besides, like the sixth embodiment, the power supply apparatus **10G** is configured to preliminary determine the order (rank) of the second power devices **41D**, **42G,** and **43D** being switched from the variable voltage mode to the constant voltage mode.

Next, an explanation is made to an operation of the power supply apparatus **10G** of the present embodiment. For example, when the detection unit **53** of the first power device **30G** detects the amount of available electric power being not greater than the threshold, the first power device **30G** controls the communication unit **54** to send the available amount detection result to the second power device (e.g. the second power device **42G**, in this situation) having the highest rank from the second power devices **41D, 42G,** and **43D**. In the second power device **42G,** when the communication unit **65** receives the available amount detection result from the first power device **30G,** the CPU **640** switches the selection switch **644** to the ground side. Thereby, the second power device **42G** is switched from the variable voltage mode to the constant voltage mode. It is noted that the output voltage **Vout** of the second power device **42G** being the constant voltage mode is selected to be identical to the output voltage **Vout** of the first power device **30G.** Consequently, even if a device having a constant output voltage **Vout** is switched from the first power device **30G** to the second power device **42G**, no change is seen in the supplied voltage to the DC device **92.** Therefore, it is possible to successfully supply an electric power to the DC device **92.**

By contrast, when the amount of available electric power exceeds the threshold in the first power device **30G,** the communication unit **54** of the first power device **30G** sends the available amount detection result to the second power device **42G**. In the second power device **42G,** when the communication unit **65** receives the available amount detection result from the first power device **30G,** the CPU **640** switches the selection switch **644** to the voltage follower **604** side, Thereby, the second power device **42G** is switched from the constant voltage mode to the variable voltage mode. In other words, the CPU **640** and the selection switch **644** constitute the switching unit configured to switch the operation mode of the second power device **42G** between the constant voltage mode ant the variable voltage mode.

Consequently, in the second power device **42G,** the output current-output voltage characteristics are switched when the amount of available electric power of the secondary cell **83** connected to the first power device **30G** falls below the threshold.

As described in the above, according to the power supply apparatus **10G,** the second power device **42G** is switched from the variable voltage mode to the constant voltage mode when the amount of available electric power of the secondary cell **83** connected to the first power device **30G** executing the constant voltage control becomes not greater than the threshold. In this situation, the second power device **42G** makes the constant voltage control, thereby keeping its output voltage **Vout** constant. In short, the second power device **42G** substitutes for the first power device **30G.** Therefore, in a like manner as the amount of available electric current exceeds the threshold (the first power device **30D** making power supply), it is possible to successfully make power supply to the DC device **92.**

In the power supply apparatus **10G** of the present embodiment, the first power device **30G** is defined as the power device to be connected to the secondary cell **83,** and the second power device **42G** is defined as the power device to be connected to the commercial power source **81.** This definition can be applied to the power supply apparatus **10E** of the seventh embodiment and the power supply apparatus **10F** of the eighth embodiment. Alternatively, in the power supply apparatus **10G**, the first power device **30G** may be defined as either the power device to be connected to the solar cell **82** or the power device to be connected to the fuel cell **84.**

## Claims

1. A power supply apparatus comprising:
a plurality of power devices, each of said power devices being configured to provide an output voltage of a DC voltage,
wherein said power supply apparatus is configured to operate simultaneously said plurality of said power devices to supply a DC power therefrom to a load device to which said power devices are connected,
wherein said plurality of said power devices comprises:
a first power device configured to have output current-output voltage characteristics of keeping an output voltage of said first power device constant irrespective of a magnitude of an output current of said first power device; and
a second power device configured to have output current-output voltage characteristics of decreasing monotonically an output voltage of said second power device with an increase of an output current of said second power device, and
wherein said second power device includes an adjustment unit configure to adjust the output current of said second power device in accordance with an instruction value,
said adjustment unit being configured to, upon receiving the instruction value, modify the output current-output voltage characteristics under a condition where the output voltage decreases monotonically as the output current increases, thereby adjusting the output current to a current corresponding to the received instruction value as well as adjusting the output voltage corresponding to the adjusted output current to the output voltage corresponding to the unadjusted output current.

2. A power supply apparatus as set forth in claim 1, wherein
said second power device includes a control unit configured to output the instruction value, said instruction value being defined to prescribe a magnitude of the output current of said second power device.

3. A power supply apparatus as set forth in claim 1, wherein
said adjustment unit is configured to modify the output current-output voltage characteristics of said second power device by adjusting the output voltage of the second power device to a voltage obtained by addition of a predetermined voltage to or subtraction of the same from the unadjusted output voltage of the second power device such that the output current of said second power device given in accordance with the modified output current-output voltage characteristics becomes corresponding to the instruction value when the output voltage of said second power device is identical to the output voltage of said first power device.

4. A power supply apparatus as set forth in claim 1, wherein
said first power device includes an AC/DC converter configured to convert a source voltage received from a commercial power source into the DC voltage,

5. A power supply apparatus as set forth in claim 1, wherein
said second power device comprises:
a current detector configured to detect the output current of the second power device;
a voltage detector configured to detect the output voltage of the second power device;
a DC/DC converter including a switching device and configured to make a power conversion by an on-off operation of said switching device;
a switching controller configured to send to said switching device a pulse width modulated signal for controlling the on-off operation of said switching device such that said second power device has a particular output current-output voltage characteristics of decreasing monotonically the output voltage of said second power device with an increase of the output current of said second power device, on the basis of a detection result of said output current detector and a detection result of said output voltage detector.

6. A power supply apparatus as set forth in claim 5, wherein
said adjustment unit is configured to calculate a difference value between a value corresponding to the received instruction value and the detection result of said current detector, and output the calculated difference value to said switching controller, and
said switching controller being configured to modify a duty ratio of the pulse width modulation signal depending on the received difference value and the detection result of said voltage detector.

7. A power supply apparatus as set forth in claim 1, wherein
said adjustment unit is configured to calculate an error between the detection result of said current detector and a value corresponding to the instruction value, and correct the output current-output voltage characteristics to reduce the calculated error under the condition where the output voltage decreases monotonically as the output current increases.

8. A power supply apparatus as set forth in claim 1, wherein
said adjustment unit is configured to modify the output current-output voltage characteristics to reduce an increase rate of the output voltage relative to a decrease of the output current when the output voltage of the second power device becomes equal to a prescribed threshold.

9. A power supply apparatus as set forth in claim 3, wherein
said first power device includes an AC/DC converter configured to convert a source voltage from a commercial power source into a DC voltage.

10. A power supply apparatus as set forth in claim 3, wherein
said second power device comprises:
a current detector configured to detect the output current of the second power device;
a voltage detector configured to detect the output voltage of the second power device;
a DC/DC converter including a switching device and configured to make a power conversion by an on-off operation of said switching device;
a switching controller configured to send to said switching device a pulse width modulated signal for controlling the on-off operation of said switching device such that said second power device has a particular output current-output voltage characteristics of decreasing monotonically the output voltage of said second power device with an increase of the output current of said second power device, on the basis of a detection result of said output current detector and a detection result of said output voltage detector.

11. A power supply apparatus as set forth in claim 10, wherein
said adjustment unit is configured to calculate a difference value between a value corresponding to the received instruction value and the detection result of said current detector, and output the calculated difference value to said switching controller, and
said switching controller being configured to modify a duty ratio of the pulse width modulation signal depending on the received difference value and the detection result of said voltage detector.

12. A power supply apparatus as set forth in claim 3, wherein
said adjustment unit is configured to calculate an error between the detection result of said current detector and a value corresponding to the instruction value, and correct the output current-output voltage characteristics to reduce the calculated error under the condition where the output voltage decreases monotonically as the output current increases.

13. A power supply apparatus as set forth in claim 3, wherein
said adjustment unit is configured to modify the output current-output voltage characteristics to reduce an increase rate of the output voltage relative to a decrease of the output current when the output voltage of the second power device becomes equal to a prescribed threshold.
